# EUROPÄISCHE PATENTSCHRIFT

(11) **EP 3 102 515 B1**
(45) Veröffentlichungstag und Bekanntmachung des Hinweises auf die Patenterteilung: **02.01.2019**
(21) Anmeldenummer: 15712249.0
(22) Anmeldetag: 03.02.2015
(51) Int. Cl.: B65G 57/03, B65G 57/18

(54) **VERFAHREN ZUM ABLEGEN VON PROFILSTÄBEN**
METHOD AND INSTALLATION FOR THE DEPOSITION OF PROFILED RODS
PROCÉDÉ ET INSTALLATION DE DÉPÔT DE BARRES PROFILÉES

(30) Priorität: 03.02.2014 AT 500752014
(43) Veröffentlichungstag der Anmeldung: 14.12.2016
(73) Patentinhaber: ASMAG-Holding GmbH, 4645 Grünau im Almtal (AT)
(72) Erfinder: VIELHABER, Johann, A-4645 Grünau im Almtal (AT)
(74) Vertreter: Burger, Hannes
(86) Internationale Anmeldenummer: PCT/AT2015/050038
(87) Internationale Veröffentlichungsnummer: WO 2015/113098

(56) Entgegenhaltungen:
- WO-A1-2011/141570
- JP-A- S5 777 122
- JP-A- H09 175 655
- JP-A- S56 151 628
- JP-A- S63 180 625
- JP-A- 2002 167 044
- SU-A1- 1 150 195
- US-A- 5 222 859
- US-A1- 2003 031 550

## Beschreibung

Die Erfindung betrifft ein Verfahren zum ausgerichteten Ablegen von sechskantigen Profilstäben, wie dies im Anspruch 1 beschrieben ist.

Bei bislang eingesetzten Anlagen zum ausgerichteten Ablegen von mehrkantigen, insbesondere sechskantigen, Profilstäben, bei welchem die Querschnitte der einzelnen Profilstäbe einer ersten Profilstabreihe von nebeneinander angeordneten Profilstäben jeweils mit ihren Längskanten nach unten in Richtung auf einen Stapeltisch der Anlage zeigend abgelegt werden, wurden im Bereich des Stapeltisches mehrere in Längserstreckung der Profilstäbe hintereinander am Stapeltisch gehaltene Stapelhilfsleisten befestigt. An der den Profilstäben zugewendeten oberen Stirnkante der einzelnen Stapelhilfsleisten waren in Abhängigkeit von der Querschnittsabmessung der jeweiligen Profilstäbe nebeneinander entsprechende V-förmige Ausnehmungen angeordnet. Die Geometrie der einzelnen Ausnehmungen wurde derart gewählt, dass einerseits die Längskanten der einzelnen Profilstäbe nach unten und somit in Richtung auf den Stapeltisch ausgerichtet waren und andererseits unmittelbar nebeneinander angeordnete Profilstäbe mit ihren einander zugewendeten Seitenflächen aneinander anliegen. Die abzulegenden Profilstäbe wurden dabei von Übergabearmen nacheinander in die jeweilige V-förmige Ausnehmung abgelegt. Die Auflage der einzelnen Profilstäbe an den jeweiligen diesen zugeordneten V-förmige Ausnehmungen erfolgte dabei an den beidseits der unteren Längskante verlaufend angeordneten Seitenflächen. Nachteilig dabei ist, dass nicht nur für jede unterschiedliche Profilgeometrie eigene Stapelhilfsleisten bereitgestellt werden mussten, sondern diese auch noch bei einem Profilwechsel entsprechend der Profilgeometrie ausgetauscht werden mussten. Diese mussten somit einerseits hergestellt, bevorratet gehalten und andererseits auch noch mit einem nicht unbeträchtlichen Montageaufwand ummontiert werden.

Aus der WO 2011/141570 A1 ist eine Vorrichtung sowie ein Verfahren zur Stapelbildung von Profilstäben mit einem rechteckigen Stapelquerschnitt bekannt geworden. Die Profilstäbe werden von einer Transportvorrichtung an Übergabearme gefördert, wobei die Übergabearme jeweils eine durchgehend abfallende Stützfläche aufweisen, von welchen die Profilstäbe in den Stapelschacht abgelegt werden. Dazu befindet sich das vordere Ende der Übergabearme im Bereich der ersten Stapelschachtwand und oberhalb des Stapelschachtgrundes. Das Ablegen der Profilstäbe in den Stapelschacht erfolgt durch Rückverstellung der Übergabearme hin in Richtung auf die Transportvorrichtung, wobei die Profilstäbe nacheinander in den Stapelschacht abgelegt werden.
Die US 5,222,859 A beschreibt eine Vorrichtung sowie ein Verfahren zur Stapelbildung von Rohren oder Rundstäben in einem im Querschnitt gesehen sechseckig ausgebildeten Stapel. Dazu werden entsprechend dem Stapelquerschnitt ausgerichtete Stapelwände aufgerichtet und die abzustapelnden den Übergabearmen zugeführt. Die Übergabearme sind über deren Längserstreckung leicht abfallend ausgebildet, wobei auf diesen die Rohre oder Rundstäbe für die Übergabe in den Stapelschacht rollen. Oberhalb der Rohre oder Rundstäbe ist ein Bremsmechanismus vorgesehen, der diese vor einer unkontrollierten Rollbewegung bremst oder sogar anhält. Weiters dient der Bremsmechanismus noch dazu, dass nach der Rückverstellung der Übergabearme und dem Absenken des Stapelschachtes zur Ablage einer weiteren Reihe von Rohren oder Rundstäben ein Hinabrollen derselben von den Übergabearmen verhindert wird. Die US 5,222,859 A offenbart tatsächlich den Oberbegriff des Verfahrensanspruchs 1.

Die SU 1150195 A zeigt eine Vorrichtung zur Stapelbildung von Rohren oder Rundstäben in einem im Querschnitt gesehen sechseckig ausgebildeten Stapel. Dazu werden entsprechend dem Stapelquerschnitt ausgerichtete Stapelwände aufgerichtet und die abzustapelnden Rohre oder Rundstäbe den Übergabearmen zugeführt. Die Übergabearme sind über deren Längserstreckung leicht abfallend ausgebildet, wobei auf diesen die Rohre oder Rundstäbe für die Übergabe in den Stapelschacht rollen.
Bei der JP 2002 167044 A werden die runden Profilstäbe über eine schräg in Richtung auf den Stapelschacht abfallend ausgebildete Rampe in entsprechender Anzahl an oberhalb des Stapelschachtes angeordnete Übergabearme für die Ablage im Stapelschacht übergeben. Die Übergabearme sind ebenfalls leicht abfallend auf die erste Stapelschachtwand verlaufend ausgerichtet. Eine Übergabevorrichtung hindern die auf den Übergabearmen bereitgestellten Profilstäbe vor einem Zurückrollen und streift diese bei der Rückverstellung der Übergabearme von diesen in den Stapelschacht ab. Die Profilstäbe werden im Stapelschacht zu einem im Querschnitt gesehen sechseckig ausgebildeten Stapel abgelegt.

Bei der JP S57 77122 A werden die runden Profilstäbe auf einem in Richtung auf den Stapelschacht abfallend ausgerichteten Zuführtisch in entsprechender Anzahl bereitgestellt und von Anschlägen an einem Weiterrollen gehindert. Nach vertikaler Rückstellung der Anschläge werden die am Zuführtisch bereitgestellten Profilstäbe auf oberhalb des Stapelschachtes befindliche Übergabearme übergeben, wobei diese ebenfalls abfallend in Richtung auf die erste Stapelschachtwand ausgerichtet sind. Bei der Übergabe der Profilstäbe befinden sich die Übergabearme oberhalb des Stapelschachtes, wobei die dem Zuführtisch gegenüberliegende erste Stapelschachtwand als Anschlag für die abzulegenden Profilstäbe bildet. Zur Abgabe werden die Übergabearme abgesenkt, sodass diese knapp oberhalb des Stapelschachtgrundes oder knapp oberhalb von bereits abgelegten Profilstäben angeordnet sind. Nachfolgend erfolgt das Abstapeln der Profilstäbe durch Rückverstellung der Übergabearme. Die Profilstäbe werden im Stapelschacht zu einem im Querschnitt gesehen sechseckig ausgebildeten Stapel abgelegt.
Der vorliegenden Erfindung liegt die Aufgabe zugrunde, ein Verfahren zum ausgerichteten Ablegen von sechskantigen, Profilstäben zu schaffen, bei dem ohne Zuhilfenahme von zusätzlichen Stapelhilfsleisten trotzdem eine exakt ausgerichtete Profilstabreihe am Stapeltisch abgelegt werden kann.
Die Aufgabe der Erfindung wird dabei durch ein Verfahren zum ausgerichteten Ablegen von sechskantigen Profilstäben gemäß den im Anspruch 1 angegebenen Merkmalen gelöst. Die sich aus der Merkmalskombination dieses Anspruches ergebenden Vorteile liegen darin, dass durch das Verschwenken der einzelnen Profilstäbe um deren Längsachse und dem zusätzlich damit verbundenen Anlegen bzw. Abstützen von dessen Seitenflächen einerseits an der ersten Stapelschachtwand und andererseits an der am Übergabearm ausgebildeten Führungsfläche eine gerichtete Abwärtsbewegung während dem Zurückverstellen des oder der ersten Übergabearme erfolgt. Durch dieses geführte Absenken kann eine exakte Ausrichtung der einzelnen Profilstäbe zueinander und auch nacheinander erfolgen, sodass für die Auflage der Profilstäbe am Stapeltisch auf zusätzliche Hilfsmittel zum gerichteten Auflegen verzichtet werden kann. Im Zuge des Verdrehens bzw. Verschwenkens des ersten Profilstabes und der damit verbundenen Anlage von dessen Seitenfläche einerseits an der ersten Stapelschachtwand sowie dem nachfolgenden gegeneinander abstützen wird so ein Wegkippen der einzelnen Profilstäbe während des Absenkens sowie bei deren Auflage an den Längskanten am Stapelschachtgrund um deren Längsachse vermieden. Damit kann durch die geometrische Wahl eine exakte, in etwa keilförmig ausgebildete Führung für die Abwärtsbewegung geschaffen werden. Dadurch kann aufgrund der Schwerkraft bzw. Gravitationskraft auch eine Selbstzentrierung der abzusenkenden Profilstäbe erreicht werden. Dies gilt nicht nur für den unmittelbar der Stapelschachtwand zugewendeten, ersten Profilstab der Profilstabreihe, sondern in weiterer Folge auch für alle anderen weiteren abzusenkenden Profilstäbe der gleichen Profilstabreihe.

Des Weiteren wird durch die vorbestimmte Ausbildung der Stapelschachtbreite ein in seiner Breite exakt vordefinierter Aufhahmeraum geschaffen, in welchem die entsprechende, erste Anzahl von "n"-Profilstäben zur Bildung der ersten Profilstabreihe sowohl aneinander anliegend als auch anliegend bzw. abstützend an den beiden Stapelschachtwänden des Stapelschachtes erfolgt. So wird durch die grundsätzliche U-förmige Querschnittsausbildung des Stapelschachtes für den Beginn der Stapelbildung nach dem Bilden der ersten Profilstabreihe eine im Wesentlichen kompakte, unmittelbar nebeneinander angeordnete Pofilstabanordnung geschaffen. Durch das Vorsehen der Übergabevorrichtung und das stetige in Position halten relativ bezüglich des ortsfesten Grundgestells der Stapelanlage wird so auch ein gesichertes Abstreifen der einzelnen Profilstäbe während der Zurückverstellung der einzelnen Übergabearme von deren horizontal ausgerichteten Stützflächen hin auf die geneigt abfallend ausgerichteten Führungsflächen erreicht. Dadurch, dass bei der Übergabe und dem Ablegen der einzelnen Profilstäbe diese nicht wahllos abgestreift werden, sondern ein geführtes Absenken aller Profilstäbe zur Bildung der ersten Profilstabreihe erfolgt, kann so die exakte Ausrichtung zueinander und damit die vorbestimmte Anordnung derselben innerhalb des Stapelschachtes erreicht werden.

Vorteilhaft ist bei den im Anspruch 2 gewählten Verfahrensschritten, dass so bis zur Anlage des in Übergaberichtung ersten Profilstabes mit seiner Längskante an der ersten Stapelschachtwand stets eine gleichbleibende, einheitliche Ausrichtung der einzelnen unmittelbar nebeneinander angeordneten Profilstäbe erzielt werden kann.

Weiters ist ein Vorgehen gemäß den im Anspruch 3 angegebenen Merkmalen vorteilhaft, weil dadurch ein unbeabsichtigtes Wegkippen bzw. Verschwenken von einzelnen Profilstäben verhindert werden kann.

Eine weitere vorteilhafte Vorgehensweise ist im Anspruch 4 beschrieben, wodurch so einerseits eine Anlage bzw. ein Andrücken des ersten Profilstabes der Profilstabreihe an die erste Stapelschachtwand erzielt werden kann. Weiters wird dadurch aber auch für den unmittelbar benachbarten, zweiten Profilstab durch die diesem zugewendete Seitenfläche des ersten Profilstabes auch für dessen Seitenwand eine entsprechende Führungsfläche zum Abgleiten bereitgestellt.

Vorteilhaft ist auch eine Verfahrensvariante gemäß Anspruch 5, weil so auch für alle weiteren Profilstäbe zur Bildung der ersten Profilstabreihe, die bereits im Stapelschacht abgelegten Profilstäbe stets aneinander anliegend gehalten werden und so ein Profilstab nach dem anderen in seiner Ausrichtung gesichert auf seiner dem Stapeltisch, insbesondere dessen Stapelschachtgrund, zugewendeten Längskante direkt aufliegend abgelegt werden kann.

Vorteilhaft ist bei den im Anspruch 6 gewählten Verfahrensschritten, dass so durch die im Zuge des Verschwenkens bzw. Verdrehens der einzelnen Profilstäbe mit einhergehende Verkürzung der Profilstabreihe in Richtung der Breite des Stapelschachtes stets ein gesichertes Anliegen der einzelnen Profilstäbe aneinander erreicht werden kann.

Weiters ist ein Vorgehen gemäß den im Anspruch 7 angegebenen Merkmalen vorteilhaft, weil so vor dem Beginn des Ablagevorganges einfach ohne Justier- und Montageaufwand die Abmessung des auszubildenden Stapelschachtes an die unterschiedlichen Gegebenheiten, wie diese beispielsweise durch Anzahl und/oder Querschnittsabmessung der einzelnen Profilstäbe bedingt sind, erfolgen kann.

Eine weitere vorteilhafte Vorgehensweise ist im Anspruch 8 beschrieben, wodurch so ein gerichtetes, auf Schwerkraft basierendes Absenken der einzelnen Profilstäbe ohne zusätzlicher Hilfsmittel erfolgen kann.

Vorteilhaft ist auch eine Verfahrensvariante gemäß Anspruch 9, weil dadurch einfach zumindest eine oder aber mehrere hintereinander angeordnete Abstützflächen für die Profilstäbe an der Stapelvorrichtung, insbesondere dem Stapeltisch, geschaffen werden können. Damit können unabhängig von den Dimensionen bzw. Querschnittsabmessungen ohne zusätzlichen Montageaufwand die abzustapelnden Profilstäbe direkt am Stapeltisch abgelegt werden.

Weiters ist ein Vorgehen gemäß den im Anspruch 10 angegebenen Merkmalen vorteilhaft, weil so für die Aufnahme und Ablage der weiteren Profilstäbe ein entsprechender Aufnahmeraum geschaffen werden kann. Damit können im Stapelschacht einfach weitere Profilstäbe je nach Anzahl und Wahl der weiteren Profilstabreihen abgesenkt bzw. abgelegt werden. Bei einer in etwa rechteckigen bzw. quadratischen Stapelausbildung der Profilstäbe ist bei sechskantigen bzw. sechseckigen Profilstäben die Anzahl der Profilstäbe der weiteren Profilstabreihe, welche unmittelbar auf der ersten Profilstabreihe aufliegen, zumeist um einen Profilstab geringer als die Anzahl "n" an Profilstäben der ersten Profilstabreihe. Die dritte Profilstabreihe kann maximal wiederum jene Anzahl an Profilstäben aufweisen, welche für die Ausbildung der ersten Profilstabreihe vorgesehen sind.

Eine weitere vorteilhafte Vorgehensweise ist im Anspruch 11 beschrieben, wodurch so vor der Übergabe der weiteren Anzahl von "m"-Profilstäben zur Bildung der weiteren Profilstabreihe diese schon am Zuführtisch zur nachfolgenden Stapelbildung bereitgestellt werden können.

Vorteilhaft ist auch eine Verfahrensvariante gemäß Anspruch 12, weil dadurch einfach und automatisiert die Übergabe der weiteren Profilstäbe vom Zuführtisch hin in den Bereich des diese aufnehmenden Stapelschachtes verbracht werden können.

Vorteilhaft ist bei den im Anspruch 13 gewählten Verfahrensschritten, dass so die weiteren Profilstäbe einfach an die bereits im Stapelschacht befindlichen Profilstäbe der ersten Profilstabreihe abgelegt werden können. Auch hier kann wiederum auf zusätzliche Stapelhilfsmittel verzichtet werden, da die bereits im Stapelschacht befindlichen Profilstäbe der ersten Profilstabreihe über ihre Querschnittsform exakt ausgerichtete Aufnahmen für die weiteren Profilstäbe der weiteren Profilstabreihe ausbilden.

Zum besseren Verständnis der Erfindung wird diese anhand der nachfolgenden Figuren näher erläutert.

Es zeigen jeweils in stark vereinfachter, schematischer Darstellung:
- Fig. 1: eine Stapelanlage in schaubildlicher Darstellung;
- Fig. 2: einen vereinfachten Querschnitt der Stapelanlage, mit vorbereitetem Stapelschacht vor dem Beginn der Übergabe der Profilstäbe, welche am Zuführtisch bereitgestellt sind;
- Fig. 3: die Stapelanlage nach Fig. 2, mit verstelltem ersten Übergabearm;
- Fig. 4: die Stapelanlage nach den Fig. 2 und 3, mit auf dem ersten Übergabearm befindlichen Profilstäben;
- Fig. 5: die Stapelanlage nach den Fig. 2 bis 4, am Beginn des Absenkvorganges mit bereits verschwenktem ersten Profilstab;
- Fig. 6: die Stapelanlage nach den Fig. 2 bis 5, bei fortschreitender Rückstellbewegung des ersten Übergabearms und dabei stattfindendem Absenkvorgang;
- Fig. 7: die Stapelanlage nach den Fig. 2 bis 6, bei weiter fortgeschrittener Rückstellbewegung des ersten Übergabearms sowie weiterem Absenkvorgang der folgenden Profilstäbe;
- Fig. 8: die Stapelanlage nach den Fig. 2 bis 7, bei vollständig am Stapeltisch abgelegter Anzahl der Profilstäbe der ersten Profilstabreihe am Stapelschachtgrund des Stapelschachtes;
- Fig. 9: die Stapelanlage nach den Fig. 2 bis 8, bei abgesenktem Stapeltisch sowie ausgefahrenem zweiten Übergabearm und am Zuführtisch abgelegten weiteren Profilstäben zur Bildung der weiteren Profilstabreihe;
- Fig. 10: die Stapelanlage nach den Fig. 2 bis 9, mit einer auf der ersten Profilstabreihe abgelegten weiteren Profilstabreihe sowie einer am Zuführtisch vorbereiteten dritten Profilstabreihe;
- Fig. 11 bis Fig. 21: die Verfahrensschritte zum Ablegen von Rundmaterialien zu einem Stapel mit einem wabenförmigen äußeren Umgrenzungsquerschnitt auf einer Stapelanlage, in Seitenansicht sowie sehr vereinfachter Darstellung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

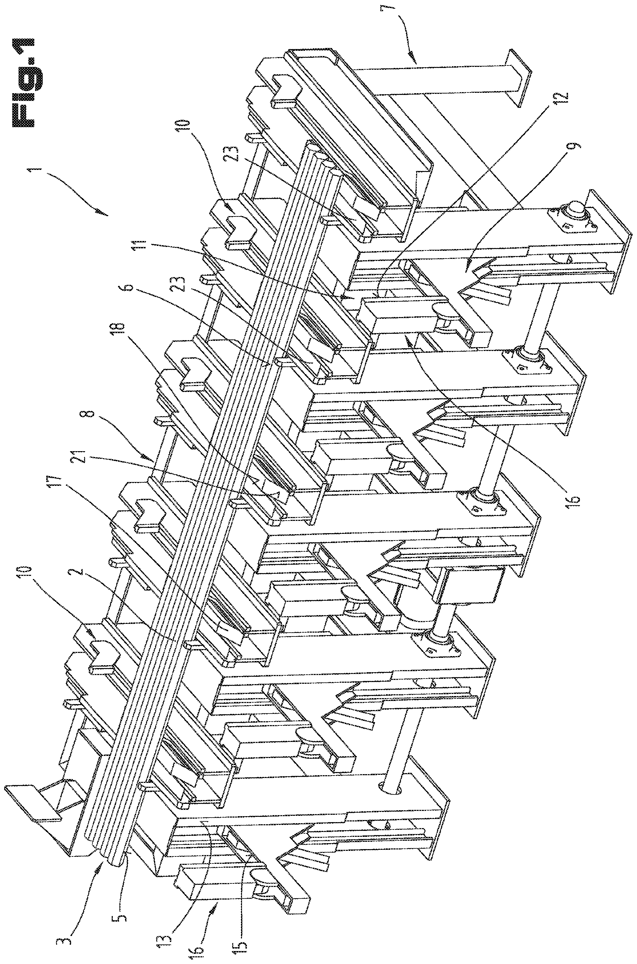

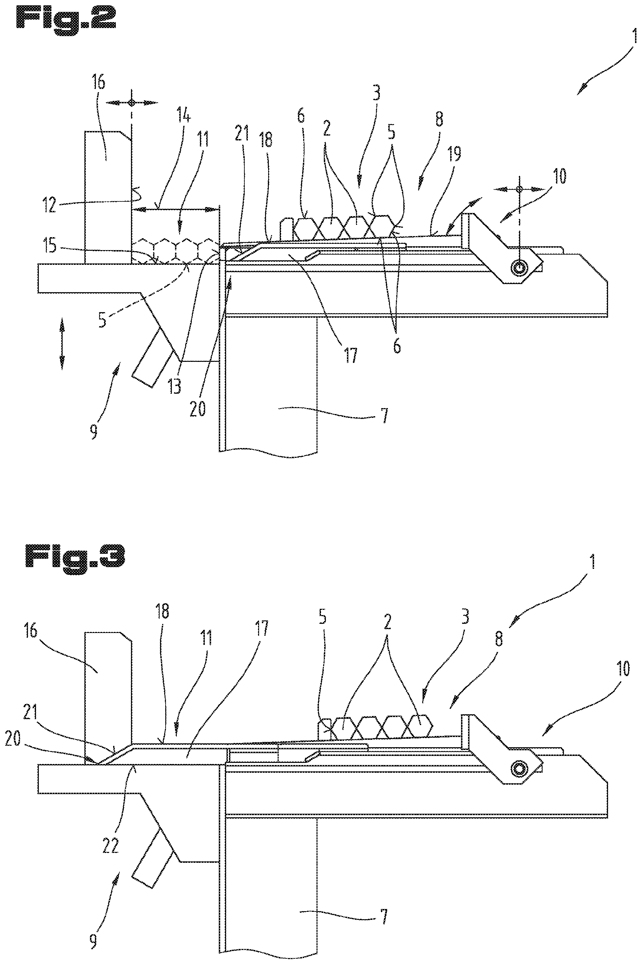

In der Fig. 1 ist eine vereinfacht und stark stilisierte Stapelanlage 1 in schaubildlicher Darstellung gezeigt, wobei in den nachfolgenden Fig. 2 bis 10 die einzelnen Schritte jeweils in stark vereinfachter Darstellung in Ansicht in Richtung der Längserstreckung von abzulegenden Profilstäben 2 gezeigt sind.

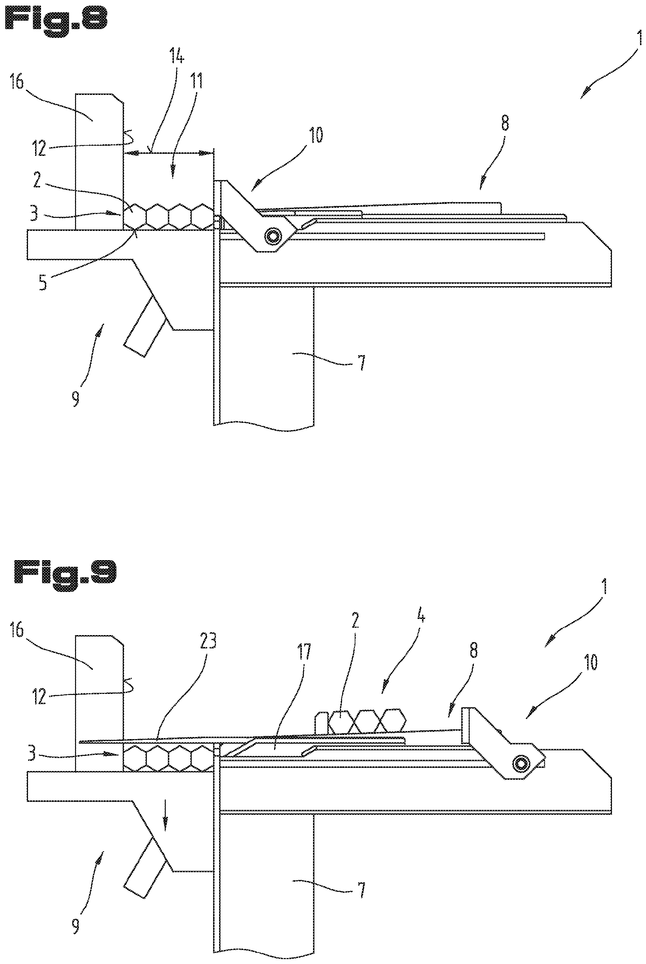

Erfindungsgemäß sind in den Fig. 2 bis 10 die aufeinanderfolgenden einzelnen Schritte des Ablegens von sechskantigen Profilstäben 2 dargestellt. Dabei sei erwähnt, dass es sich bei den Profilstäben 2 um Langgut mit einer bevorzugt äußeren sechskantigen bzw. sechseckigen Querschnittsform handelt. Es können dabei sowohl Vollmaterialien als auch Hohlprofile die Profilstäbe 2 bilden. Es könnten aber auch andere mehreckige Profilstäbe 2 abgelegt werden, wobei dann aufgrund der unterschiedlichen Winkelverhältnisse eine entsprechende Anpassung bzw. Abstimmung erforderlich ist. Bei einer sechskantigen bzw. sechseckigen Querschnittsform der Profilstäbe 2 kann eine Stapelbildung ohne Freiräumen zwischen unmittelbar benachbarten Profilstäben 2 erzielt werden.
Die Profilstäbe 2 weisen eine Längserstreckung sowie eine sich zwischen den Enden erstreckende Mittelachse auf, wobei mehrere der Profilstäbe 2 unmittelbar nebeneinander zu zumindest einer ersten Profilstabreihe 3 angeordnet werden. Nach dem Bilden der ersten Profilstabreihe 3 wird zumindest eine zweite bzw. weitere Profilstabreihe 4 mit den jeweils gleiche Querschnittsabmessungen aufweisenden Profilstäben 2 auf der ersten Profilstabreihe 3 abgelegt. Die Querschnitte der einzelnen Profilstäbe 2 der ersten Profilstabreihe 3 sollen so ausgerichtet werden, dass deren Längskanten 5 jeweils nach unten zeigend abgelegt sind. Dies dient dazu, bei der nachfolgenden übereinander Anordnung von mehreren Profilstabreihen 3, 4 und der damit verbundenen Stapelbildung nach dem Umreifen mit Haltebändern einen in sich zusammenhaltenden Bund von gleichartig im Querschnitt ausgebildeten Profilstäben 2 zu erhalten. Weiters weisen die einzelnen Profilstäbe 2 im Querschnitt gesehen in Abhängigkeit von der Anzahl der jeweiligen Längskanten 5 eine entsprechende Anzahl von Seitenflächen 6 auf. Da bevorzugt stets Profilstäbe 2 mit zueinander gleichen Querschnittsabmessungen sowohl nebeneinander sowie gegebenenfalls auch übereinander in mehreren Profilstabreihen 3, 4 - siehe Fig. 9 - für den Transport zu einem Bund zusammengestellt bzw. zusammengefügt werden, werden in den einzelnen Figuren diese bzw. deren Bestandteile stets auch mit gleichen Bezugszeichen versehen.
Die hier vereinfacht in der Fig. 1 gezeigte Stapelanlage 1 umfasst ein Grundgestell 7, einen darauf angeordneten oder ausgebildeten Zuführtisch 8 sowie einen bevorzugt am Grundgestell 7 gehaltenen sowie daran verstellbar geführt gelagerten Stapeltisch 9 für die Ablage der einzelnen Profilstäbe 2. Am Zuführtisch 8 kann weiters noch ein oder in Längserstreckung der Profilstäbe 2 mehrere hintereinander angeordnete, jedoch nicht näher bezeichnete Anschlagelemente vorgesehen sein. Diese können dazu dienen, dass vor dem Übergabevorgang der zur Bildung der ersten Profilstabreihe 3 am Zuführtisch 8 bevorratet abgelegten Profilstäbe 2 diese zu einem aneinander anliegenden Paket zusammen geführt werden können. Dies kann entweder durch eine eigene Zufördervorrichtung der Profilstäbe 2 erfolgen, wenn die Profilstäbe 2 am Zuführtisch 8 abgelegt und zwischengespeichert werden oder aber durch eine oder mehrere im Bereich des Zuführtisches 8 angeordnete Übergabevorrichtungen 10 durchgeführt werden.

Die am Zuführtisch 8 bevorratet angeordneten Profilstäbe 2 werden durch eine oder mehrere Übergabevorrichtungen 10 ausgehend vom Zuführtisch 8 mit einer in senkrechter Richtung bezüglich der Längserstreckung der Profilstäbe 2 erfolgenden Querbewegung hin in den Bereich des Stapeltisches 9 verbracht bzw. bewegt. Dabei kann die Übergabevorrichtung 10 von einer über den Zuführtisch 8 vorragenden Arbeitsstellung in eine innerhalb des Zuführtisches 8 befindliche Ruhestellung verstellt werden. Die Ruhestellung der Übergabevorrichtung 10 kann z.B. dazu dienen, wenn nach erfolgter Übergabe der Profilstäbe 2 und Bildung der ersten Profilstabreihe 3, bereits am Zuführtisch 8 weitere Profilstäbe 2 zur Bildung einer weiteren Profilstabreihe 4 bereitgestellt worden sind, dass die Übergabevorrichtung 10 unterhalb der weiteren Profilstäbe 2 in Querrichtung bezüglich der Längserstreckung derselben auf die vom Stapeltisch 9 abgewendete Seite verstellt werden kann. Anschließend wird die bzw. werden die Übergabevorrichtungen 10 erneut in deren Arbeitsstellung verstellt und es kann ein neuerlicher Übergabevorgang eingeleitet werden.

Weiters ist im Bereich des Stapeltisches 9 ein Stapelschacht 11 angeordnet bzw. ausgebildet. Im vorliegenden Ausführungsbeispiel ist der Stapelschacht 11 durch erste und zweite Stapelschachtwände 12, 13 in einer sich in senkrechter Richtung dazwischen erstreckenden Breite 14 ausgebildet bzw. angeordnet. Bevorzugt ist die Breite 14 variierbar und in Abhängigkeit von der Querschnittsabmessung sowie der Anzahl von Profilstäben 2 einstellbar und anschließend arretierbar. Der Stapelschacht 11 ist weiters durch einen am Stapeltisch 9 ausgebildeten, bevorzugt ebenflächigen Stapelschachtgrund 15 in seiner Tiefe begrenzt. Dabei sei erwähnt, dass der Stapelschacht 11 bzw. die den diesen begrenzenden Stapelschachtwände 12, 13 sowie der Stapelschachtgrund 15 nicht über die gesamte Länge bzw. Längserstreckung der aufzunehmenden Profilstäbe 2 vorgesehen bzw. ausgebildet sein müssen, sondern durch mehrere jeweils fluchtend hintereinander in Längserstreckung der Profilstäbe 2 gesehen angeordnete Teilflächen bzw. einzelne Wandabschnitte gebildet sein können. So kann zumindest eine erste der Stapelschachtwände 12 durch einen oder mehrere vom Stapeltisch 9 aufragende Steher 16 gebildet sein. Anstatt einzelner Steher 16 wäre es aber auch möglich, eine durchgehende Stützwand auszubilden, an welcher die erste Stapelschachtwand 12 zur Begrenzung des Stapelschachtes 11 angeordnet oder ausgebildet ist. Bevorzugt sind die beiden Stapelschachtwände 12, 13 parallel zueinander ausgerichtet. Weiters können diese auch eine vertikale Ausrichtung aufweisen.

Das Ermitteln der Breite 14 zur Bildung des Stapelschachtes 11 ist für das nachfolgende gerichtete Ablegen der einzelnen Profilstäbe 2 zur Bildung der ersten Profilstabreihe 3 im Stapelschacht 11 wesentlich, da die einzelnen Profilstäbe 2 der ersten Profilstabreihe 3 mit ihren Längskanten 5 direkt am Stapelschachtgrund 15 aufgelegt bzw. abgestützt werden sollen und die beiden äußersten, den beiden Stapelschachtwänden 12, 13 unmittelbar benachbart angeordneten Profilstäbe 2, jeweils mit ihren Seitenflächen 6 an den Stapelschachtwänden 12, 13 abgestützt bzw. angelegt werden sollen. Damit kann, wie dies nachfolgend noch gezeigt und beschrieben wird, ein unbeabsichtigtes Wegkippen der beiden äußersten Profilstäbe 2 der ersten Profilstabreihe 3 für die nachfolgende Stapelbildung verhindert werden.

Je nach Anzahl sowie Abmessung der einzelnen Profilstäbe 2, welche nachfolgend zu einem Stapel bzw. Bund zusammengefasst werden sollen, ist festzulegen, aus welcher Profilstabanzahl der herzustellende Bund zusammengesetzt werden soll. Dabei ist auch auf das Bundgewicht für den nachfolgenden Transport zu achten. Ist die Gesamtanzahl der abzulegenden Profilstäbe 2 ermittelt, wird die einzelne Lagenbildung der bevorzugt mehreren Profilstabreihen 3, 4 festgelegt. In Abhängigkeit von der Anzahl der Profilstäbe 2, welche die erste Profilstabreihe 3 bilden, wird dann in Abhängigkeit von der jeweiligen Querschnittsabmessung der Profilstäbe 2 die Breite 14 zwischen den beiden Stapelschachtwänden 12, 13 ermittelt. Die Breite 14 des Stapelschachts 11 errechnet sich aus einem Produktwert einer Querschnittsabmessung zwischen den parallel zueinander verlaufend ausgerichteten Seitenflächen 6 eines Profilstabes 2 und der ersten Anzahl "n" an Profilstäben 2 der ersten Profilstabreihe 3. Bei einem Sechskantquerschnitt wird diese Querschnittsabmessung auch als sogenannte Schlüsselweite (SW) bezeichnet.

Ist der Wert für die einzustellende Breite 14 ermittelt und festgelegt, kann der oder können die die erste Stapelschachtwand 12 bildenden Steher 16 am Stapeltisch 9 durch nicht näher beschriebene Stellmittel automatisch auf die entsprechende relative Position verstellt werden. Die Ermittlung der Breite 14 sowie die nachfolgende Veranlassung und Durchführung der Verstellbewegung zur Breiteneinstellung des Stapelschachtes 11 kann durch eine Steuervorrichtung z.B. rechnerunterstützt erfolgen. Ist die vorbestimmte Position erreicht und der Stapelschacht 11 weist die den Profilstäben 2 entsprechende Breite 14 auf, kann ein Arretieren des oder der Steher 16 am Stapeltisch 9 erfolgen. Bei einer ausreichenden Führung der Steher 16 sowie bei selbsthemmend ausgebildeten Stellmitteln, wie. z.B. Gewindespindeln, Schrittmotoren oder dgl. könnte sogar auf eine Fixierung der Position verzichtet werden.

Da die einzelnen Profilstäbe 2 in ihren Außenabmessungen bzw. Querschnittsabmessungen toleranzbedingte Abweichungen aufweisen können, ist bei der Ermittlung der Breite 14 entsprechend darauf Bedacht zu nehmen. Dabei ist ein Mindestmaß der Breite 14 auf alle Fälle einzuhalten, um sicher die gesamte Anzahl der Profilstäbe 2 zur Bildung der ersten Profilstabreihe 3 in entsprechender Ausrichtung zueinander zwischen den beiden Stapelschachtwänden 12, 13 anordnen zu können. Bei einer zu klein bzw. zu kurz gewählten Breite 14 könnte so nicht die gesamte Anzahl der Profilstäbe 2 ordnungsgemäß im Stapelschacht 11 an seinem Stapelschachtgrund 15 abgelegt werden. Bei einer zu groß gewählten Breite 14 könnte dann ein seitliches Wegkippen zumindest eines der Profilstäbe 2 erfolgen. Unter diesem Gesichtspunkt ist die Auslegung bzw. die Beschreibung der Breite 14 zu verstehen, bei welcher diese zumindest in etwa diesem Produktwert zu entsprechen hat. Werden hingegen die einzelnen Profilstäbe 2 in ihren Querschnittsabmessungen mit sehr geringen Toleranzabweichungen zueinander hergestellt, kann die Breite 14 relativ exakt vorherbestimmt werden und so auf alle Fälle so groß gewählt werden, dass in allen Fällen die gesamte erste Anzahl "n" an Profilstäben 2 zur Bildung der ersten Profilstabreihe 3 einwandfrei zwischen den beiden Stapelschachtwänden 12, 13 eingebracht werden kann und dort auch an den Stapelschachtwänden 12, 13 abstützend angelegt sind.

Die zumindest eine zweite Stapelschachtwand 13 ist bei diesem hier gezeigten Ausführungsbeispiel unmittelbar anschließend an den Zuführtisch 8 am Grundgestell 7 angeordnet bzw. dort ausgebildet. So wäre es aber auch möglich, zumindest eine der Stapelschachtwände 12, 13 an am Grundgestell 7 und/oder am Steher 16 angeordneten, leistenförmigen Bauelementen auszubilden, um so ein direktes, hartes Anliegen an Metallteilen zu vermeiden. Diese leistenförmigen Bauteile könnten beispielsweise durch Kunststoff und/oder Gummileisten oder aber auch Holzleisten gebildet sein.

Der Stapelschachtgrund 15 des Stapelschachtes 11 ist hier ebenflächig ausgebildet und dient zur direkten Auflage der Profilstäbe 2 der ersten Profilstabreihe 3 mit ihren Längskanten 5.

Weiters umfasst die Stapelanlage 1 zumindest einen, bevorzugt jedoch mehrere erste Übergabearme 17, welche vor dem Verlagern der am Zuführtisch 8 bevorrateten Profilstäbe 2 in den Bereich des Stapelschachtes 11 hineinragend verstellt werden und dort zur zwischenzeitlichen Auflage der im Stapelschacht 11 abzulegenden Profilstäbe 2 zumindest zu der ersten Profilstabreihe 3 dient bzw. dienen. Der oder die ersten Übergabearme 17 weisen jeweils an ihren den Profilstäben 2 zugewendeten Oberseiten Stützflächen 18 auf.

Wie aus der Fig. 2 zu ersehen ist, befinden sich die hier dargestellten ersten Übergabearme 17 in einer eingefahrenen Stellung im Bereich des Zuführtisches 8 und ragen nicht in den Stapelschacht 11 hinein. Der Zuführtisch 8 bildet zur Ablage bzw. Abstützung der einzelnen Profilstäbe 2 eine Stützebene 19 aus, welche im vorliegenden Ausführungsbeispiel leicht geneigt hin in Richtung auf den Stapelschacht 11 verlaufend ausgerichtet ist. In diesem eingefahrenen Zustand des oder der Übergabearme 17 sind deren Stützflächen 18 unterhalb der Stützebene 19 in vertikaler Richtung gesehen angeordnet, sodass der oder die Profilstäbe 2 alleinig auf der durch den Zuführtisch 8 gebildeten Stützebene 19 aufliegen.

Die Profilstäbe 2 zur Bildung der ersten Profilstabreihe 3 sind in vollen Linien am Zuführtisch liegend dargestellt, wobei die gleiche Profilstabreihe 3 in strichlierten Linien in der bereits abgelegten Stellung im Stapelschacht 11 gezeigt ist.

Wie nun besser aus der Fig. 3 zu ersehen ist, befindet sich hier der Übergabearm 17 in seiner vom Zuführtisch 8 vorragenden Aufnahmestellung der einzelnen Profilstäbe 2 für den Beginn des Übergabevorgangs derselben und zur nachfolgenden gerichteten Ablage im Stapelschacht 11. Im vorliegenden Ausführungsbeispiel ist die Anzahl "n" an Profilstäben 2 zur Bildung der ersten Profilstabreihe 3 beispielhaft mit vier Profilstäben 2 gewählt. Es wird zumindest die erste Anzahl "n" von Profilstäben 2 für den Übergabevorgang am Zuführtisch 8 bereitgestellt, wobei die Profilstäbe 2 nebeneinander sowie jeweils auf einer von deren Seitenflächen 6 auf den Zuführtisch 8 aufliegend abgelegt werden. Für die Übergabe wird dann jene Anzahl "n" an Profilstäben 2 ausgewählt, welche zuvor bestimmt worden ist.

Der oder die ersten Übergabearme 17 sind dabei so angeordnet bzw. ausgebildet, dass in deren ausgefahrenen Stellung der Zuführtisch 8 mit seiner Stützebene 19 im Übergangsbereich zwischen dem Zuführtisch 8 und dem Stapelschacht 11 in etwa ebenflächig auf die Stützflächen 18 übergeht. Des Weiteren ist in dieser Stellung die Stützfläche 18 in Vertikalrichtung gesehen oberhalb des Stapelschachtgrundes 15 verlaufend angeordnet. Der oder die Übergabearme 17 weisen an ihren vom Zuführtisch 8 abgewendeten, ersten Endbereichen jeweils erste Enden 20 auf. Dabei sind weiters die ersten Endbereiche der ersten Übergabearme ausgehend von den in etwa horizontal ausgerichteten Stützflächen 18 jeweils mit geneigt abfallend ausgerichteten Führungsflächen 21 versehen. Dabei reicht die bzw. reichen die Führungsflächen 21 ausgehend von den jeweiligen Stützflächen 18 bis in den Bereich des ersten Endes 20 und dort bis nahe an eine Unterseite 22 des Übergabearms 17 heran. Damit wird das erste Ende 20 des Übergabearms 17 nahezu keilförmig verlaufend zwischen der Unterseite 22 und der Führungsfläche 21 ausgebildet.

Bevorzugt erfolgt das Verstellen der ersten Übergabearme 17 vor dem Beginn des Übergabevorgangs und dabei so weit, dass die Stützfläche 18 des Übergabearms 17 entweder bis in etwa an die erste Stapelschachtwand 12 heranreicht, an dieser endet oder geringfügig über die erste Stapelschachtwand 12 auf die vom Zuführtisch 8 abgewendete Seite vorragt. Im Übergangsbereich zwischen der Stützfläche 18 und der Führungsfläche 21 ist somit ein Knick ausgebildet, an welchem die Stützfläche 18 endet und die Führungsfläche 21 beginnt. Dabei erfolgt das Verstellen der ersten Übergabearme 17 ausgehend vom Zuführtisch 8 bevorzugt soweit, dass deren erste Enden 20 zumindest bis an die erste Stapelschachtwand 12 heranreichen, bevorzugt jedoch über den Stapelschacht 11 auf die vom Zuführtisch 8 abgewendete Seite hinausragen. Damit wird ein unbeabsichtigtes und unkontrolliertes Herunterfallen der Profilstäbe 2 von den ersten Übergabearmen 17 in den Stapelschacht 11 verhindert.

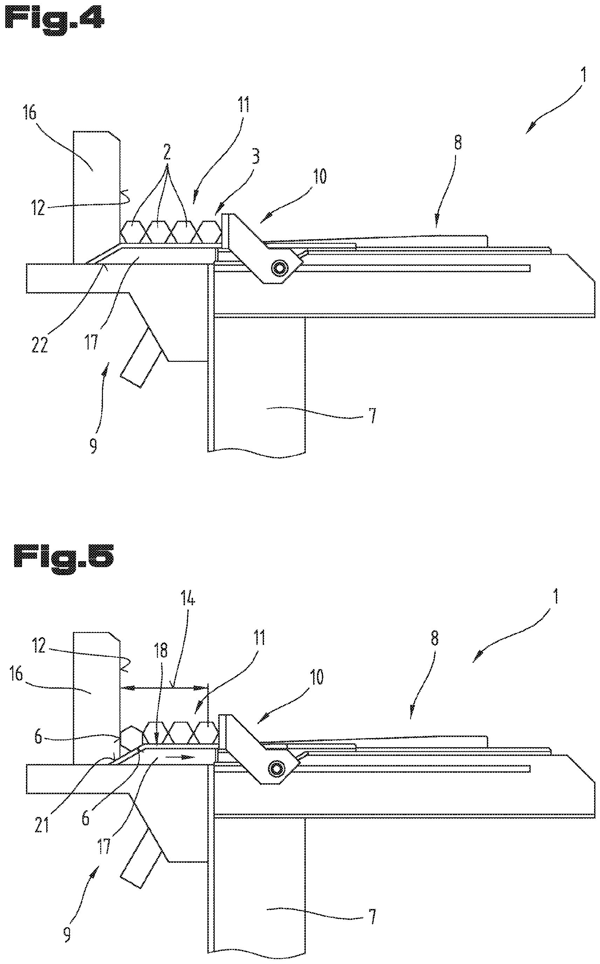

Es wäre aber auch noch möglich, dass der Übergangsbereich zwischen der Stützfläche 18 und der Führungsfläche 21 vor dem Beginn des Übergabevorgangs der Profilstäbe 2 vom Zuführtisch 8 auf die ersten Übergabearme 17 innerhalb der Breite 14 des Stapelschachtes 11 angeordnet ist. Damit ist der Übergangsbereich bzw. der Knick von der ersten Stapelschachtwand 12 in Richtung des Zuführtisches 8 distanziert. Das erste Ende 20 des ersten Übergabearms 17 reicht dann entweder bis in den Bereich der ersten Stapelschachtwand 12 heran, endet an dieser oder ragt geringfügig über die erste Stapelschachtwand 12 hinaus vor. Damit wird beim Übergeben der Profilstäbe 2 zur Bildung der ersten Profilstabreihe 3 auf den oder die ersten Übergabearme 17 zumindest der in Übergaberichtung erste Profilstab 2 an der ersten Stapelschachtwand 12 sowie an der Führungsfläche 21 anliegend angeordnet. Diese Position des ersten Profilstabes 2 entspricht dann schon jener Stellung, wie dies in der nachfolgenden Fig. 5 beschrieben worden ist. Damit könnte der Vorgang des Anlegens der Längskante 5 des in Transportrichtung ersten Profilstabes 2 übersprungen bzw. weggelassen werden. Dabei ist auch hier stets auf eine einwandfreie Lage der einzelnen Profilstäbe 2 während des Übergabevorganges zu achten.

Wie nun weiters in der Fig. 4 dargestellt ist, wurde die erste Anzahl von "n"-Profilstäbe 2 mittels der Übergabevorrichtung 10 in senkrechter Richtung bezüglich der Längserstreckung der Profilstäbe 2 auf die oberhalb des Stapeltisches 9 befindlichen ersten Übergabearme 17 verlagert. Diese Verlagerung bzw. Querschiebebewegung erfolgt so, dass die einzelnen Profilstäbe 2 an ihren einander zugewendeten Längskanten 5 aneinander anliegen und mit ihren Seitenflächen 6 zuerst am Zuführtisch 8 und anschließend an der oder den an den ersten Übergabearmen 17 ausgebildeten bzw. angeordnete Stützflächen 18 aufliegen.

Im vorliegenden Ausführungsbeispiel ist die gesamte Anzahl von "n"-Profilstäben 2 auf einmal von der Übergabevorrichtung 10 vom Zuführtisch 8 auf die ersten Übergabearme 17 verlagert worden. Es wäre aber auch möglich, dass nur einzelnen Profilstäbe 2 hintereinander durch die Übergabevorrichtung 10 vom Zuführtisch 8 auf die ersten Übergabearme 17 verlagert werden, wobei dies so lange erfolgt, bis dass die gesamte Anzahl von "n"-Profilstäben an den ersten Übergabearmen 17 zur Ablage im Stapelschacht 11 bereitgestellt ist.

Das Querverlagern des oder der Profilstäbe 2 erfolgt soweit, dass jener in Übergaberichtung erste Profilstab 2 mit seiner Längskante 5 an der zumindest einen vom Zuführtisch 8 distanziert angeordneten, ersten Stapelschachtwand 12 zur Anlage kommt bzw. gebracht wird. Die nachfolgenden Profilstäbe 2 werden so lange in Richtung auf die erste Stapelschachtwand 12 hin bewegt, bis dass die gesamte, erste Anzahl von "n"-Profilstäben 2 an ihren jeweils einander zugewendeten Längskanten 5 aneinander anliegen. Mittels der Übergabevorrichtung 10 können die Profilstäbe 2 weiterhin aneinander anliegend gehalten werden.

In der Fig. 5 ist nun dargestellt, dass der oder die ersten Übergabearme 17 in Richtung auf den Zuführtisch 8 zurück verstellt bzw. verlagert werden. Während dieser Rückstellbewegung der ersten Übergabearme 17 wird der erste Profilstab 2 von seiner Anlage bzw. Auflage an den Stützflächen 18 in den Bereich der Führungsflächen 21 der ersten Übergabearme 17 verbracht. Die einzelnen Profilstäbe 2 werden weiterhin von der Übergabevorrichtung 10 relativ bezüglich des Stapelschachtes 11 bzw. des Zuführtisches 8 ortsfest positioniert gehalten. Aufgrund der geneigt abfallend ausgebildeten Führungsflächen 21 erfolgt ein Verschwenken des ersten Profilstabes 2 um seine Längsachse, sodass dieser mit einer seiner Seitenflächen 6 an der ersten Stapelschachtwand 12 und mit einer seiner weiteren Seitenflächen 6 an der oder den abfallend ausgerichteten Führungsflächen 21 der ersten Übergabearme 17 anliegt. Damit bilden die zumindest erste Stapelschachtwand 12 und die Führungsfläche 21 gemeinsam jeweils Anlageflächen für die Seitenflächen 6 des ersten abzulegenden Profilstabs 2 der ersten Profilstabreihe 3 aus.

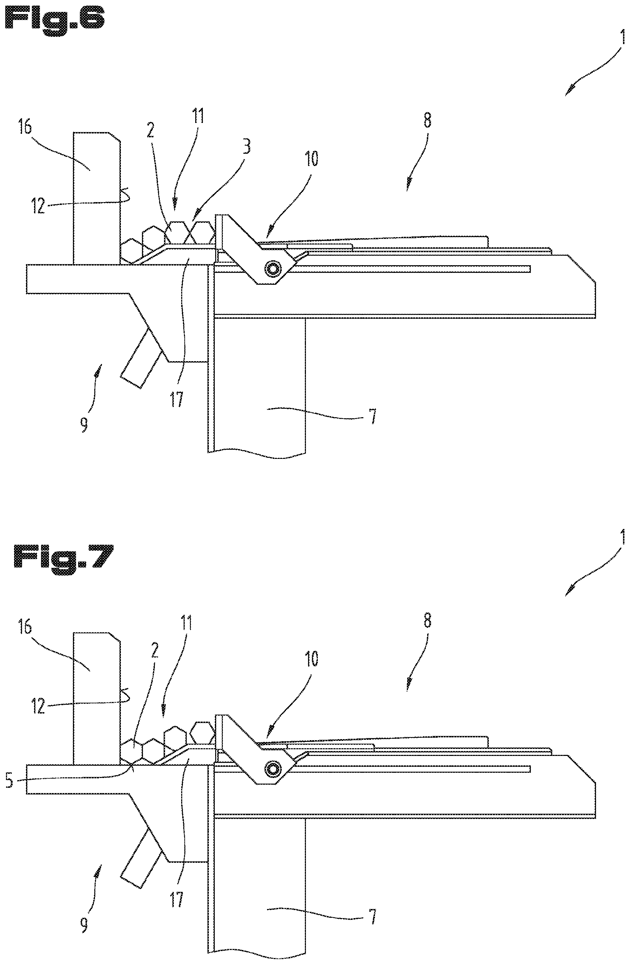

In der Fig. 6 ist der weitere Fortschritt des Ablagevorgangs dargestellt, wobei hier mit fortschreitender Rückstellung der ersten Übergabearme 17 ein geführtes Absenken des ersten Profilstabes 2 sowohl an der ersten Stapelschachtwand 12 als auch an den Führungsflächen 21 so lange erfolgt, bis der erste Profilstab 2 mit seiner nach unten und somit dem Stapelschachtgrund 15 zugewendeten Längskante 5 am Stapelschachtgrund 15 des Stapelschachtes 11 direkt aufliegt. Um das Abgleiten der Profilstäbe 2 zu erleichtern, können die erste Stapelschachtwand 12 und/oder die Führungsfläche 21 mit einem Gleitbelag versehen bzw. damit ausgeführt sein.

Aufgrund des Fortschreitens der Rückverstellung erfolgt nicht nur das geführte Absenken des ersten Profilstabes 2, sondern es werden auch nacheinander die nachfolgend angeordneten weiteren Profilstäbe 2 um deren Längsachse soweit verdreht bzw. verschwenkt, sodass die weiteren Profilstäbe 2 jeweils mit ihren Seitenflächen 6 an den abfallend ausgerichteten Führungsflächen 21 der ersten Übergabearme 17 angelegt werden. Dabei erfolgt weiters ein geführtes Absenken der weiteren Profilstäbe 2 bis zu deren direkten Auflage mit ihren jeweiligen Längskanten 5 am Stapelschachtgrund 15 des Stapelschachtes 11 bis hin zur fertigen Ausbildung der ersten Profilstabreihe 3. Dieses geführte Absenken ist am besten aus einer Zusammenschau der Fig. 5 und 6 zu ersehen. Ist die erste Profilstabreihe 3 vollständig aufliegend mit ihren Längskanten 5 am Stapelschachtgrund 15 abgelegt, werden auch die beiden äußersten Profilstäbe 2 der ersten Profilstabreihe 3 anliegend an den beiden Stapelschachtwänden 12, 13 des Stapelschachtes 11 abgestützt und bilden somit eine an deren Seitenflächen 6 aneinander liegende Reihe von Profilstäben 2.

Um ein ungewolltes Abkippen des ersten Profilstabes 2 bei ausgefahrenen Übergabearmen 17 zu vermeiden, werden die ersten Übergabearme 17 soweit vom Zuführtisch 8 über den Stapelschacht 11 hinausragend verstellt, dass die in etwa horizontal ausgerichteten Stützflächen 18 bis hin zur ersten Stapelschachtwand 12 reichen und die abfallend ausgerichteten Führungsflächen 21 über die erste Stapelschachtwand 12 hinausragen. Um ein geordnetes und sicheres Absenken der einzelnen Profilstäbe 2 zur Bildung der ersten Profilstabreihe 3 zu gewährleisten, soll die erste Anzahl von "n"-Profilstäben 2 während der nacheinander erfolgenden Absenkbewegung hin auf den Stapelschachtgrund 15 aneinander anliegend von der Übergabevorrichtung 10 gehalten werden. Während des Absenkvorganges des ersten Profilstabes 2 wird in Abhängigkeit von der Querschnittsabmessung auch der dem ersten Profilstab 2 unmittelbar benachbarte, zweite Profilstab 2 der ersten Profilstabreihe 3 abgesenkt und wird dabei mit seiner dem ersten Profilstab 2 zugewendeten Seitenfläche 6 an der dieser zugewendeten Seitenfläche 6 des ersten Profilstabes 2 anliegend daran geführt abgesenkt. Damit erfolgt stets eine gegenseitige Anlage und Abstützung der einzelnen Profilstäbe 2 aneinander. Dieser Vorgang des aneinander geführten Absenkens der einzelnen Profilstäbe 2 aneinander erfolgt solange, bis dass alle Profilstäbe 2 zur Bildung der ersten Profilstabreihe 3 am Stapelschachtgrund 15 mit ihren Längskanten 5 aufliegen.

Aufgrund des Verschwenkens bzw. Verdrehens und dem damit verbundenen Abkippen der einzelnen Profilstäbe 2 erfolgt auch eine Verkürzung der ersten Profilstabreihe 3 in Querrichtung bezüglich ihrer Längserstreckung ausgehend von deren aneinander anliegenden, sowie einander zugewendeten Längskanten 5. Um dieser Verkürzung Rechnung zu tragen, ist es vorteilhaft, wenn während der Absenkbewegung der einzelnen Profilstäbe 2 der ersten Profilstabreihe 3 die Übergabevorrichtung 10 schrittweise so lange hin in Richtung auf die erste Stapelschachtwand verstellt wird, bis ein Abstand zwischen der ersten Stapelschachtwand 12 und der Übergabevorrichtung 10 in etwa der Breite 14 des Stapelschachtes 11 entspricht.

Wie bereits zuvor beschrieben, ist die Wahl der Breite 14 des Stapelschachtes 11 abhängig von der Anzahl "n" an Profilstäben 2 sowie deren Querschnittsabmessung. Da hier auf zusätzliche Stapelhilfsmittel, insbesondere Stapelleisten, verzichtet wird und die Ablage der einzelnen Profilstäbe 2 direkt am Stapeltisch 9 vorgesehen ist, ist vor Beginn der Durchführung des Ablegevorganges der ersten Profilstabreihe 3 die entsprechende Breite 14 des Stapelschachtes 11 zu ermitteln und einzustellen.

Wie am besten aus der Fig. 2 zu ersehen ist, kann der oder können die die erste Stapelschachtwand 12 bildenden Steher 16 bezüglich der feststehend bzw. ortsfest ausgebildeten, zweiten Stapelschachtwand 13 bezüglich dieser in senkrechter Richtung am Stapeltisch 9 verlagert werden. Dadurch wird es möglich, im Zuge der Ermittlung der Breite 14 des Stapelschachtes 11 in Abhängigkeit von der jeweiligen Querschnittsabmessung des abzulegenden Profilstabes 2 sowie der ersten Anzahl von "n"-Profilstäben 2 die Verstellung automatisiert durchzuführen, um so unnötigen Justier- und Montageaufwand zu vermeiden. Die Einstellung der Breite 14 kann dabei beispielsweise durch nicht näher dargestellte Antriebsmittel, wie beispielsweise Schrittmotoren mit Gewindespindeln, Stellzylindern oder dergleichen erfolgen. Dabei können die einzelnen Steher 16 und/oder eine durchgehend ausgebildete Schachtwand in entsprechenden Führungen aufgenommen werden und mittels der Stellvorrichtungen auf die vorbestimmte Position entsprechend der Breite 14 verstellt und dort positioniert gehalten werden.

Bevorzugt werden die erste und zweite Stapelschachtwand 12, 13 parallel zueinander ausgerichtet. Im vorliegenden Ausführungsbeispiel sind die beiden Stapelschachtwände 12, 13 insbesondere in einer vertikalen Ausrichtung zueinander angeordnet. Des Weiteren ist der Stapelschachtgrund 15 rechtwinkelig dazu und insbesondere horizontal verlaufend ausgerichtet. Damit ist ein Querschnitt des Stapelschachtes 11 zumindest in seiner Breitenabmessung und damit in Richtung der Längserstreckung desselben bzw. der Längserstreckung der abzulegenden Profilstäbe 2 gesehen festgelegt bzw. definiert.

Wie weiters aus der Fig. 5 zu ersehen ist, ist die Neigung der Führungsfläche bzw. der Führungsflächen 21 an dem oder den ersten Übergabearmen 17 derart gewählt, dass diese bei abzulegenden, sechskantig bzw. sechseckig ausgebildeten Profilstäben 2 zwischen sich und der ersten Stapelschachtwand 12 einen Winkel von 60° einschließen. Dieser zuvor angegebene Wert des Winkels zwischen der ersten Stapelschachtwand 12 und der oder den Führungsflächen 21 an den ersten Übergabearmen 17 hängt von der Anzahl der Längskanten 5 des Profilstabes 2 ab und kann bei einer davon abweichenden Anzahl - im vorliegenden Fall sechs Längskanten - dazu entsprechend angepasst werden.

Ist nun, wie dies in der Fig. 8 dargestellt ist, die erste Profilstabreihe 3 mit den einzelnen Profilstäben 2 im Stapelschacht 11 an dessen Stapelschachtgrund 15 unmittelbar nebeneinander sowie aneinander anliegend angeordnet, können eine oder mehrere, weitere Profilstabreihen 4, 3 auf der ersten Profilstabreihe 3 abgelegt werden.

Wie nun aus der Fig. 9 zu ersehen ist, ist nach der Bildung der ersten Profilstabreihe 3 der Stapeltisch 9 zur Aufnahme der weiteren Profilstabreihe 4 soweit abzusenken, dass zumindest einer, bevorzugt mehrere, zweite Übergabearme 23 zur Übergabe der weiteren Anzahl von "m"-Profilstäben 2 zur Bildung der weiteren Profilstabreihe 4 oberhalb der bereits sich im Stapelschacht 11 befindlichen Profilstäbe 2 der ersten Profilstabreihe 3 ausgehend vom Zuführtisch 8 zumindest bis hin zur ersten Stapelschachtwand 12 verstellt werden können. Der bei dieser Ausführungsform eingesetzte, zweite Übergabearm 23 ist in senkrechter Richtung bezüglich des Stapelschachtgrundes 15 mit einer unterschiedlichen, insbesondere kleineren Dicke ausgebildet, als der erste Übergabearm 17. Dabei kann auch von einer schwertförmigen Ausbildung des oder der zweiten Übergabearme 23 gesprochen werden. Durch das Vorhandensein der ersten Profilstabreihe 3 bilden sich zwischen unmittelbar nebeneinander angeordneten Profilstäbe 2 V-förmige Aufnahmenuten bzw. zueinander geneigt ausgebildete Abstützflächen an den Profilstäben 2 aus, welche zur gerichteten Ablage der weiteren Profilstäbe 2 der weiteren Profilstabreihe 4 dienen.

Zur Bildung der weiteren Profilstabreihe 4 ist zumindest eine weitere Anzahl von "m"-Profilstäben 2 zur Bildung der weiteren Profilstabreihe 4 nebeneinander sowie jeweils auf einer von deren Seitenflächen 6 aufliegend am Zuführtisch 8 bereitzustellen. Die zweiten Übergabearme 23 sind ausgehend vom Zuführtisch 8 mit ihren ersten Enden zumindest bis hin zur ersten Stapelschachtwand 12 des Stapelschachtes 11 sowie gegebenenfalls darüber hinaus zu verstellen. Anschließend daran wird die weitere Anzahl von "m"-Profilstäben 2 - im vorliegenden Ausführungsbeispiel drei Stück - vom Zuführtisch 8 in senkrechter Richtung zu deren Längserstreckung mittels der Übergabevorrichtung 10 auf die zweiten Übergabearme 23 verlagert. Mittels der Übergabevorrichtung 10 wird die weitere Anzahl von "m"-Profilstäben 2 jeweils an deren einander zugewendeten Längskanten 5 aneinander anliegend gehalten. Zum Ablegen der weiteren Profilstäbe 2 und der damit verbundenen Bildung der weiteren Profilstabreihe 4 werden die zweiten Übergabearme 23 in Richtung auf den Zuführtisch 8 zurückverstellt. Dabei wird die weitere Profilstabreihe 4 von der Übergabevorrichtung 10 relativ bezüglich des Zuführtisches positioniert gehalten und weiters dabei schrittweise die einzelnen Profilstäbe 2 auf die erste Profilstabreihe 3 abgelegt.

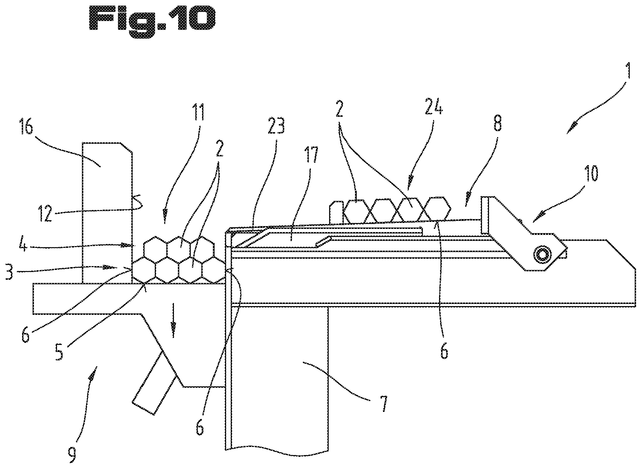

In der Fig. 10 ist eine weiter abgesenkte Stellung des Stapeltisches 9 am Grundgestell 7 gegenüber der Darstellung in der Fig. 9 gezeigt. Es sind hier bereits die erste und zweite Profilstabreihe 3, 4 im Stapelschacht 11 abgelegt. Eine weitere, dritte Profilstabreihe 24, welche im vorliegende Ausführungsbeispiel in der Anzahl "n" an Profilstäben 2 der ersten Profilstabreihe 3 entspricht, ist am Zuführtisch 8 bereits bereitgestellt worden. Es könnte aber auch eine dazu geringere Anzahl "n" an Profilstäben 2 für die Übergabe und die nachfolgende Stapelbildung bereitgestellt werden. Der Übergabevorgang in den Stapelschacht 11 kann analog erfolgen, wie dies zuvor in der Fig. 9 für die zweite bzw. weitere Profilstabreihe 4 beschrieben worden ist.

Es wäre auch noch möglich, für die Übergabe der weiteren Profilstabreihen 24, 4, 3 anstatt der zuvor beschriebenen zweiten Übergabearme 23 die für die Übergabe der ersten Profilstabreihe 3 beschriebenen ersten Übergabearme 17 einzusetzen. Damit würden die ersten Übergabearme 17 auch die zweiten Übergabearme 23 bilden.

Wie bereits zuvor beschrieben, können auch mehrere Profilstabreihen 3, 4, 24 übereinander zu einem Stapel im Stapelschacht 11 des Stapeltisches 9 abgelegt werden. Ist der Stapel fertig ausgebildet, kann dieser entweder direkt im Bereich der Stapelanlage 1 oder aber auch auf einer dazu distanziert angeordneten Vorrichtung zu einem Bund zusammengefasst und gegebenenfalls umreift werden. Dies ist hinlänglich bekannt und wird deshalb nicht darauf näher eingegangen.

Gleiches gilt aber auch für das Bereitstellen der Profilstäbe 2 im Bereich des Zuführtisches 8. Zumeist werden die einzelnen Profilstäbe 2 mittels einer nicht dargestellten Querfördervorrichtung auf der vom Stapeltisch 9 gegenüberliegenden Seite auf den Zuführtisch 8 verbracht. Dies kann beispielsweise durch die unterschiedlichsten Fördervorrichtungen erfolgen, welche der besseren Übersichtlichkeit halber hier nicht dargestellt worden sind.

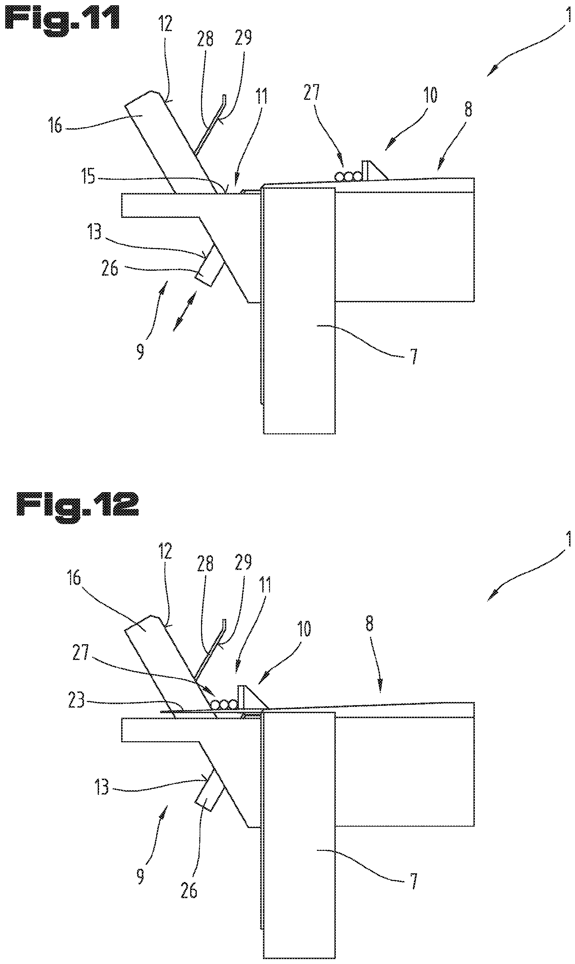

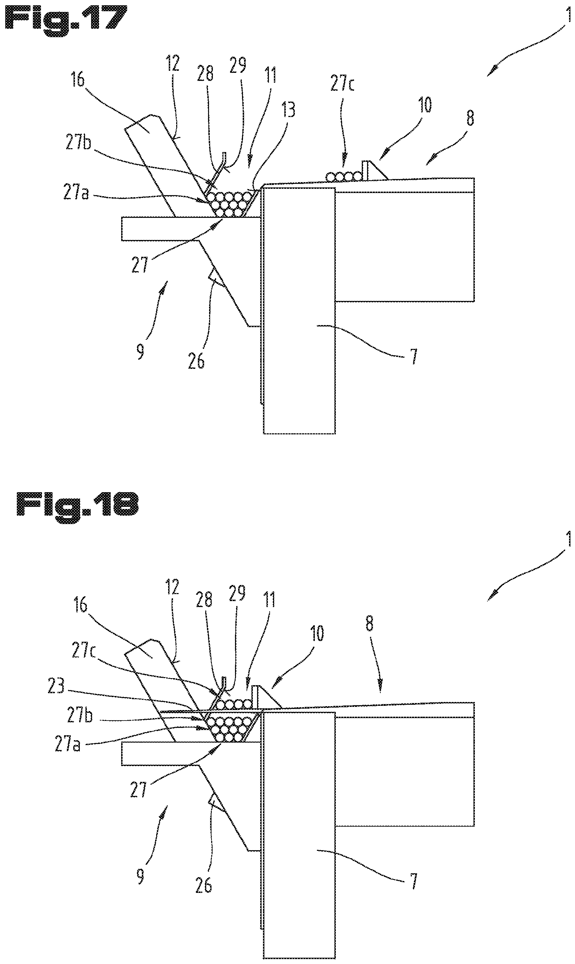

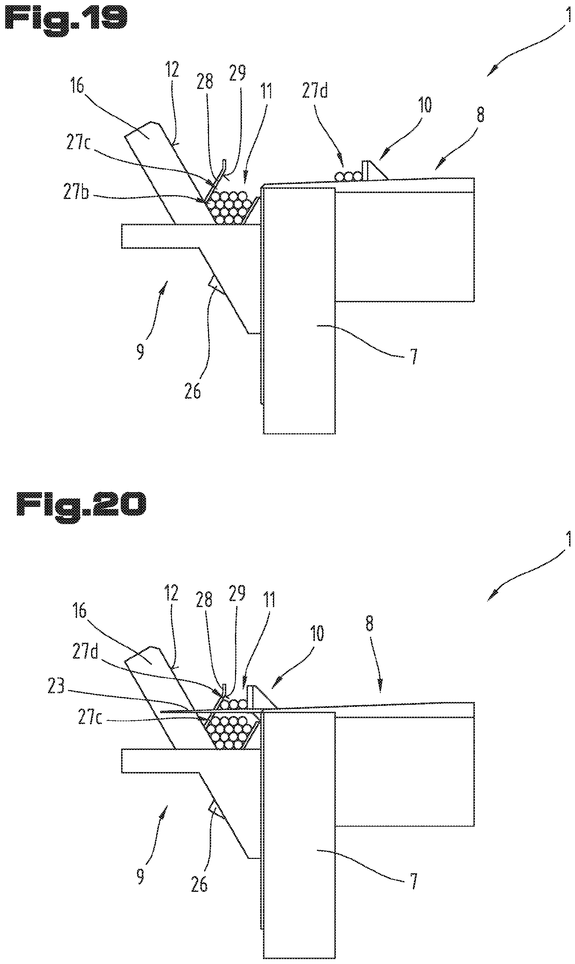

In den Fig. 11 bis 21 ist eine weitere und gegebenenfalls für sich eigenständige Ausführungsform der Stapelanlage 1 gezeigt, wobei wiederum für gleiche Teile gleiche Bezugszeichen bzw. Bauteilbezeichnungen wie in den vorangegangenen Fig. 1 bis 10 verwendet werden. Um unnötige Wiederholungen zu vermeiden, wird auf die detaillierte Beschreibung in den vorangegangenen Fig. 1 bis 10 hingewiesen bzw. Bezug genommen.

Der zuvor beschriebene Vorgang zum Ablegen von kantigen, insbesondere sechskantigen Profilstäben 2 kann in an andere Querschnittsformen der Profilstäbe 2 angepasster Form ebenfalls an der gleichen Stapelanlage 1 durchgeführt werden. Im vorliegenden Ausführungsbeispiel werden als Profilstäbe 2 Rundmaterialien, insbesondere Rohre oder zylinderförmige Stangen, als Langgut zu einem Stapel zusammengeschlichtet und anschließend zu einem Bund zusammengefasst. Im Querschnitt gesehen wird bei Rundmaterialien zumeist ein Wabenquerschnitt bzw. Sechskantquerschnitt als äußere Umgrenzung gewählt. Dabei ist die Lage des Umrisses der äußeren Umgrenzung so gewählt, dass eine Seitengrenzfläche 25 des herzustellenden Stapels bzw. Bundes parallel bezüglich des Stapelschachtgrundes 15 des Stapelschachtes 11 verlaufend angeordnet ist. Da die grundsätzliche Ausbildung des Stapelschachtes 11, insbesondere dessen Stapelschachtgrundes 15 gleich erfolgt, wie dies zuvor in den Fig. 1 bis 10 beschrieben wurde, ist auch dieser Stapelschachtgrund 15 ebenflächig und insbesondere horizontal verlaufend ausgerichtet.

Dazu ist der zumindest eine Steher 16 bzw. sind die Steher 16 in einem Ausmaß auf die vom Zuführtisch 8 abgewendete Seite zu verschwenken bzw. zu verstellen, sodass zwischen der ersten Stapelschachtwand 12 und dem Stapelschachtgrund 15 ein Winkel von 120° eingeschlossen ist. Die zweite Stapelschachtwand 13 wird hier nicht direkt durch das Grundgestell 7 oder daran angeordnete Anschlagleisten gebildet, sondern durch zumindest ein oder mehrere in Längserstreckung der Profilstäbe 2 hintereinander am Stapeltisch 9 angeordnete Stapelhilfselemente 26. Die beiden, den Stapelschacht 11 im Bereich seines Stapelschachtgrundes 15 unmittelbar benachbarten Stapelschachtwände 12, 13 schließen zwischen sich einen Winkel von 60° ein. Damit schließt die zweite Stapelschachtwand 13 mit dem Stapelschachtgrund 15 auch einen Winkel von 120° ein, jedoch hin auf den Zuführtisch 8 geneigt ausgerichtet.

Je nach gewählter Querschnittsgröße des zu bildenden Stapels bzw. Bundes aus dem Rundmaterial ist wiederum zuerst die Gesamtanzahl der Profilstäbe 2 zu ermitteln. Dabei wird bevorzugt die Gesamtanzahl an Profilstäben 2 so gewählt, dass im Bereich der Seitengrenzflächen 25 stets eine lückenlose Anordnung der Profilstäbe 2 erfolgt. Dabei sei erwähnt, dass bei einer entsprechenden Anordnung und Ausrichtung der einzelnen Profilstäbe 2 zueinander entlang der Seitengrenzflächen 25 nicht unbedingt stets die gleiche Anzahl an Profilstäben 2 angeordnet sein muss. So kann trotz einer sechseckigen Querschnittsform die Seitenlänge der Seitengrenzflächen 25 im Querschnitt gesehen zueinander unterschiedlich lang ausgebildet sein. Bevorzugt werden hier einander gegenüberliegende Seitengrenzflächen 25 nicht nur parallel zueinander ausgerichtet, sondern weisen diese auch die gleiche Seitenlänge auf.

In dem hier gezeigten, vorliegenden Ausführungsbeispiel ist der Querschnitt des zu bildenden Bundes an Profilstäben 2 so gewählt, dass im Bereich jeder der Seitengrenzflächen 25 stets drei unmittelbar nebeneinander angeordnete Profilstäbe 2 angeordnet sind. Damit ergibt sich eine Gesamtanzahl von fünf Profilstabreihen 27 bis 27d nacheinander in den Stapelschacht 11 übereinander sowie versetzt zueinander abgelegt werden. Dabei sei erwähnt, dass die in den Fig. 11 bis 21 dargestellte Stapelbildung nur beispielhaft gewählt ist und die Anzahl der Profilstäbe 2 sowie die Größe der Querschnittsform des Bundes frei gewählt werden kann.

Vor Beginn des Übergabevorganges der ersten Profilstabreihe 27 ist im Bereich des Stapelschachtgrundes 15 in Abhängigkeit von der Querschnittsabmessung der abzustapelnden Profilstäbe 2 sowie deren Anzahl im Bereich der dem Stapelschachtgrund 15 zugewendeten Seitengrenzfläche 25 des Stapelquerschnittes die entsprechende Breite 14 des Stapelschachtes 11 zu ermitteln. Nach der Ermittlung und Einstellung der Breite 14 des Stapelschachtes 11 wird der zumindest eine Steher 16 bzw. werden die Steher 16 in deren geneigten Stellung am Stapeltisch 9 ortsfest für die Dauer des jeweiligen Stapelvorgangs daran gehalten. Aufgrund der V-förmigen Ausrichtung der beiden Stapelschachtwände 12, 13 ausgehend vom Stapelschachtgrund 15 zueinander, ist ein entsprechender Seitenabstand der Steher 16 vom Grundgestell 7 zu wählen bzw. einzustellen. Das bzw. die Stapelhilfselemente 26 können durch leistenförmige Bauteile gebildet sein, welche in Richtung von deren Längserstreckung sowie geneigten Ausrichtung bezüglich des Stapelschachtgrundes 15 am Stapeltisch 9 geführt sowie bevorzugt schrittweise bezüglich diesem verstellbar sind. Durch die schrittweise Verstellung der Stapelhilfselemente 26 bezüglich des schrittweisen Absenkens des Stapeltisches 9 und dem damit verbundenen immer höheren Überragens des Stapelschachtgrundes 15 wird so bzw. werden so die zweiten Stapelschachtwände 13 hintereinander am Stapeltisch 9 ausgebildet.

Zur Ausbildung einer weiteren Begrenzung des Stapels im Anschluss an die erste Stapelschachtwand 12 des Stehers 16 kann an diesem ein Anschlagelement 28 über den Steher 16 auf die dem Zuführtisch 8 zugewendete Seite vorragend angeordnet werden. Eine Anschlagfläche 29 des Anschlagelementes 28 schließt mit der dem Stapelschachtgrund 15 zugewendeten, ersten Stapelschachtwand 12 einen Winkel von 120° zwischen sich ein. Damit wird auf der dem Zuführtisch 8 gegenüberliegenden Seite des Stapelschachtes 11 ein Anschlag geschaffen, mit welchem eine weitere Seitengrenzfläche 25 des zu bildenden Stapels definiert ist. Mit diesem Vorsehen des oder der Anschlagelemente 28 sind im Zusammenwirken mit den zuvor beschriebenen Bauelementen, nämlich dem Stapelhilfselement 26 mit der angeordneten oder ausgebildeten zweiten Stapelschachtwand 13, dem Stapelschachtgrund 15, der ersten Stapelschachtwand 12 sowie der Anschlagfläche 29 insgesamt vier der Seitengrenzflächen 25 zur Bildung des Stapels definiert.

In der Fig. 11 ist gezeigt, dass im Bereich des Stapeltisches 9 der Stapelschacht 11 in entsprechender Breite 14 sowie Distanz vom Zuführtisch 8 bzw. Grundgestell 7 im Bereich des Stapeltisches 9 ausgebildet ist. Am Zuführtisch 8 ist die erste Anzahl an Profilstäben 2 zur Bildung der ersten Profilstabreihe 27 bevorratet angeordnet.

In der Fig. 12 ist dargestellt, dass hier der zuvor beschriebene zweite Übergabearm 23 über den Zuführtisch 8 vorragend bis zumindest hin zur ersten Stapelschachtwand 11 ragend verstellt worden ist. Anschließend daran werden die ersten Profilstäbe 2 mittels der Übergabevorrichtung 10 soweit in Richtung des Stehers 16 verlagert, dass sich diese im Bereich des Stapelschachtes 11 befinden, insbesondere an der ersten Stapelschachtwand 12 anliegen. Anschließend daran wird der zweite Übergabearm 23 in Richtung auf den Zuführtisch 8 zurückverstellt, wobei durch die Übergabevorrichtung 10 die einzelnen Profilstäbe 2 in Querrichtung bzw. in Übergaberichtung positioniert relativ bezüglich des Stapelschachtes 11 gehalten werden. Durch das Zurückverstellen des zweiten Übergabearms 23 erfolgt das Ablegen der ersten Profilstabreihe 27 in den Stapelschacht 11. Dabei liegen die Profilstäbe 2 am Stapelschachtgrund 15 sowie den beiden Stapelschachtwänden 12, 13 an.

Dabei sei erwähnt, dass anstelle des hier beschriebenen zweiten Übergabearms bzw. der zweiten Übergabearme 23 auch der oder die ersten Übergabearme 17 eingesetzt werden können. Deshalb wird in weitere Folge nur mehr vom Übergabearm bzw. Übergabearmen 23 gesprochen.

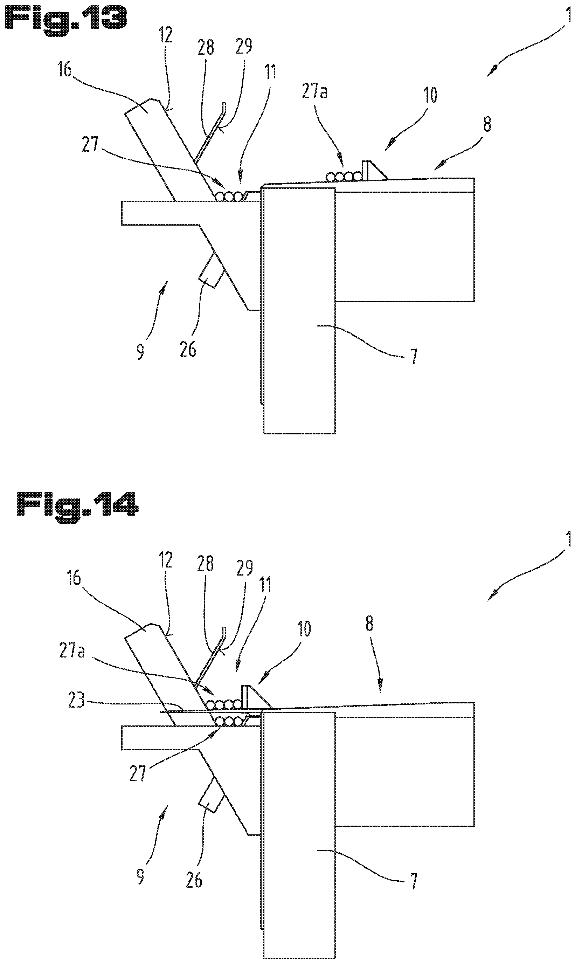

In der Fig. 13 ist nun gezeigt, dass der Stapeltisch 9 zur Aufnahme einer weiteren Profilstabreihe 27a vertikal nach unten verstellt worden und somit bezüglich des Niveaus des Zuführtisches 8 abgesenkt ist und am Zuführtisch 8 die entsprechende Anzahl an Profilstäben zur Bildung der weiteren Profilstabreihe 27a bevorratet angeordnet sind.

In der Fig. 14 ist wiederum die ausgefahrene Stellung des Übergabearms 23 im Bereich des Stapelschachtes 11 gezeigt, wobei zur Abgabe der weiteren Profilstabreihe 27a die einzelnen Profilstäbe 2 mittels der Übergabevorrichtung 10 bereits in den Bereich des Stapelschachtes 11 verlagert worden sind. Durch entsprechendes zurückstellen bzw. zurückverlagern des oder der Übergabearme 23 wird die zweite Profilstabreihe 27a auf die erste Profilstabreihe 27 abgelegt.

Zur Aufnahme einer dritten Profilstabreihe 27b wird wiederum der Stapeltisch 9 um das entsprechende Ausmaß in vertikaler Richtung nach unten verstellt bzw. abgesenkt und die Profilstäbe 2 zur Bildung der dritten Profilstabreihe 27b am Zuführtisch 8 bevorratet abgelegt. Eine relative Verstellung des oder der Stapelhilfselemente 26 relativ bezüglich des Stapeltisches 9 erfolgt in etwa um das Ausmaß der durchgeführten Verstellbewegung des Stapeltisches nach unten, um so für die nächste abzulegende Profilstabreihe 27b die entsprechende zweite Stapelschachtwand 13 in dem dem Zuführtisch 8 zugewendeten Bereich des Stapelschachtes 11 auszubilden. Damit kann bzw. können die Stapelhilfselemente 26 bezüglich des Stapeltisches 9 in mehreren aufeinanderfolgenden Schritten jeweils in eine den Stapelschachtgrund 15 immer weiter überragende Stellung verstellt werden.

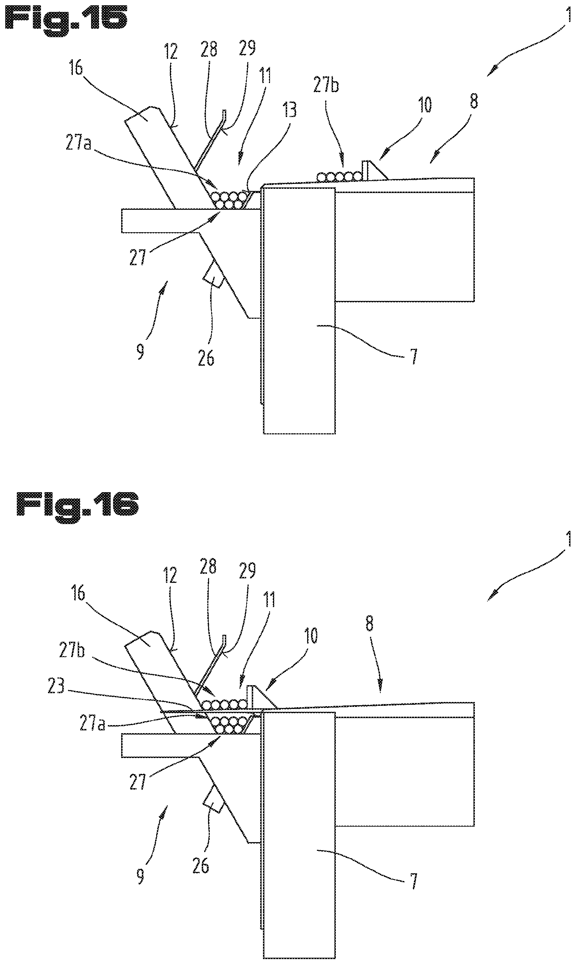

In den Fig. 16 bis 20 sind die weiteren analog durchzuführenden Vorgänge gezeigt, um die weiteren Profilstabreihen 27b bis 27d jeweils zuerst am Zuführtisch 8 zu bevorraten und anschließend mit der Übergabevorrichtung 10 auf die ausgefahrenen Übergabearm 23 zu verlagern und anschließend jeweils von diesen auf die darunter liegenden Profilstabreihen 27 abzulegen.

Bei der Ablage der vierten Profilstabreihe 27c erfolgt bei diesem Ausführungsbeispiel das erste Anliegen des in Übergaberichtung ersten Profilstabes 2 dieser Profilstabreihe 27c an dem oder den Anschlagelementen 28 bzw. deren Anschlagflächen 29.

Die Profilstabreihe 27c sowie mögliche nachfolgend abzulegende weitere Profilstabreihen werden von der Übergabevorrichtung 10 in Position relativ bezüglich des Stapelschachtes 11 sowie in Anlage an der oder den Anschlagflächen 29 gehalten, wie dies bereits zuvor schon beschrieben worden ist. Zur Ablage der jeweiligen Profilstabreihe wird der oder werden die Übergabearme 23 in Richtung auf den Zuführtisch 8 zurückverstellt und dabei durch die Rückhaltewirkung der Übergabevorrichtung 10 vom Übergabearm 23 bzw. den Übergabearmen 23 auf den bereits vorhandenen Teilstapel abgelegt.

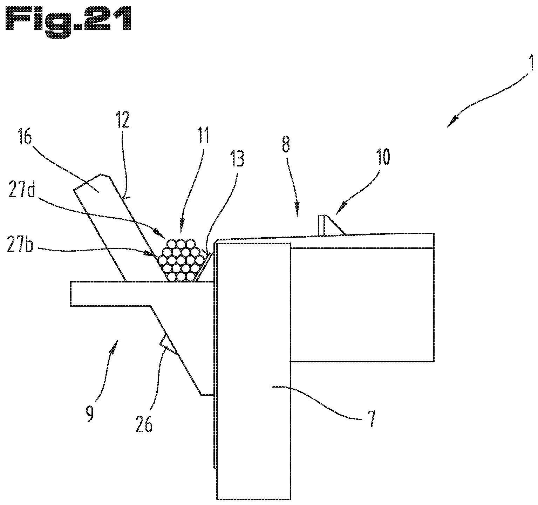

In der Fig. 21 ist gezeigt, dass das oder die Anschlagelemente 28 aus dem Bereich des Stapelschachtes 11 beispielsweise wegverschwenkt bzw. wegverstellt sind. Der gesamte Stapel an Profilstäben 2 wird im Querschnitt gesehen an der ersten Stapelschachtwand 12, dem Stapelschachtgrund 15 sowie der zweiten Stapelschachtwand 13 abgestützt. In dieser Position bzw. zueinander angeordneten Stellung der einzelnen Profilstäbe 2 kann das Bilden des Bundes beispielsweise durch mehrfaches Umreifen in Richtung der Längserstreckung des Stapels bzw. Bundes erfolgen.

Während der schrittweisen Abwärtsbewegung des Stapeltisches 9 am Grundgestell 7 wird das bzw. werden die Stapelhilfselemente 26 um ein entsprechendes Ausmaß bezüglich des Stapelschachtgrundes 15 nach oben verstellt, um so für die jeweilige aufzunehmende Profilstabreihe 27 bis 27d eine Abstützung daran zu erzielen. Es kann sich aber auch noch als vorteilhaft erweisen, wenn jene Profilstabreihe mit der größten Anzahl an Profilstäben 2 im Stapelschacht 11 abgelegt ist - im vorliegenden Ausführungsbeispiel die Profilstabreihe 27b - maximal eine letzte Verlagerung bezüglich des Stapeltisches 9 durchgeführt wird. Dies ist auch aus der Darstellung in der Fig. 13 zu ersehen. Nach der Ablage der hier letzten beiden Profilstabreihen, nämlich der Profilstabreihen 27c und 27d, ist keine weitere Verlagerung des oder der Stapelhilfselemente 26 bezüglich des Stapeltisches 29 mehr durchzuführen, da auch keine Anlage durch die abnehmende Anzahl an Profilstäben 2 mehr erfolgt.

Die Ausführungsbeispiele zeigen mögliche Ausführungsvarianten der Stapelanlage 1, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Die den eigenständigen erfinderischen Lösungen zugrundeliegende Aufgabe kann der Beschreibung entnommen werden.

Vor allem können die einzelnen in den Fig. 1; 2 bis 8; 9; 10; 11 bis 21 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

Der Ordnung halber sei abschließend darauf hingewiesen, dass zum besseren Verständnis des Aufbaus der Stapelanlage 1 diese bzw. deren Bestandteile teilweise unmaßstäblich und/oder vergrößert und/oder verkleinert dargestellt wurden.

### Bezugszeichenaufstellung

- 1: Stapelanlage
- 2: Profilstab
- 3: erste Profilstabreihe
- 4: weitere Profilstabreihe
- 5: Längskante
- 6: Seitenfläche
- 7: Grundgestell
- 8: Zuführtisch
- 9: Stapeltisch
- 10: Übergabevorrichtung
- 11: Stapelschacht
- 12: erste Stapelschachtwand
- 13: zweite Stapelschachtwand
- 14: Breite
- 15: Stapelschachtgrund
- 16: Steher
- 17: erster Übergabearm
- 18: Stützfläche
- 19: Stützebene
- 20: erstes Ende
- 21: Führungsfläche
- 22: Unterseite
- 23: zweiter Übergabearm
- 24: dritte Profilstabreihe
- 25: Seitengrenzfläche
- 26: Stapelhilfselement
- 27: Profilstabreihe
- 28: Anschlagelement
- 29: Anschlagfläche

## Patentansprüche

1. Verfahren zum ausgerichteten Ablegen von Profilstäben (2), bei welchem die Querschnitte der einzelnen Profilstäbe (2) einer ersten Profilstabreihe (3) von nebeneinander angeordneten Profilstäben (2) jeweils mit einer ihrer Längskanten (5) nach unten in Richtung auf einen Stapeltisch (9) einer Stapelanlage (1) zeigend abgelegt werden, wobei das Verfahren folgende Schritte umfasst:
- Bereitstellen zumindest einer ersten Anzahl von n-Profilstäben (2) auf einem Zuführtisch (8) der Stapelanlage (1), wobei die Profilstäbe (2) nebeneinander sowie jeweils auf einer von deren Seitenflächen (6) auf dem Zuführtisch (8) aufliegend abgelegt werden,
- Ausbilden eines Stapelschachtes (11) am Stapeltisch (9) der Stapelanlage (1) anschließend an den Zuführtisch (8), wobei der Stapelschacht (11) mit einer Breite (14) zwischen ersten und zweiten Stapelschachtwänden (12, 13) ausgebildet wird, welche Breite (14) aus zumindest in etwa einem Produktwert einer Querschnittsabmessung zwischen parallel zueinander verlaufend ausgerichteten Seitenflächen (6) eines einzelnen Profilstabes (2) und der ersten Anzahl "n" an Profilstäben (2) ermittelt und eingestellt wird,
- Verstellen mehrerer erster Übergabearme (17) ausgehend vom Zuführtisch (8), sodass erste Enden (20) der ersten Übergabearme (17) über den Stapelschacht (11) auf die vom Zuführtisch (8) abgewendete Seite hinausragen,
- Verlagern der ersten Anzahl von n-Profilstäben (2) in senkrechter Richtung bezüglich deren Längserstreckung mittels einer Übergabevorrichtung (10) auf die oberhalb des Stapeltisches (9) befindlichen ersten Übergabearme (17),
**dadurch gekennzeichnet, dass**
die Profilstäbe sechskantig sind, und dass die erste Anzahl von n-Profilstäben (2) auf an den Übergabearmen (17) angeordnete, in etwa horizontal ausgerichtete Stützflächen (18) verlagert wird, sodass jener in Übergaberichtung erste Profilstab (2) mit seiner Längskante (5) an der zumindest einen vom Zuführtisch (8) distanziert angeordneten ersten Stapelschachtwand (12) zur Anlage gebracht wird, und weiter **gekennzeichnet durch**
- aneinander anliegendes Halten der ersten Anzahl von n-Profilstäben (2) an ihren jeweils einander zugewendeten Längskanten (5) mittels der Übergabevorrichtung (10),
- Zurückverstellen der ersten Übergabearme (17) in Richtung auf den Zuführtisch (8), wobei erste Endbereiche der ersten Übergabearme (17) jeweils anschließend an die in etwa horizontal ausgerichtete Stützfläche (18) eine hin auf das erste Ende (20) abfallend ausgerichtet verlaufende Führungsfläche (21) aufweisen, und während der Rückstellbewegung der ersten Übergabearme (17) der erste Profilstab (2) von seiner Anlage an den in etwa horizontal ausgerichteten Stützflächen (18) in den Bereich der abfallend ausgerichteten Führungsflächen (21) gebracht wird,
- dabei Verschwenken des ersten Profilstabes (2) um seine Längsachse, sodass dieser mit einer seiner Seitenflächen (6) an der ersten Stapelschachtwand (12) und mit einer weiteren seiner Seitenflächen (6) an den abfallend ausgerichteten Führungsflächen (21) der ersten Übergabearme (17) anliegt,
- geführtes Absenken des ersten Profilstabes (2) mit einer seiner Seitenflächen (6) an der ersten Stapelschachtwand (12) sowie mit einer weiteren seiner Seitenflächen (6) an den Führungsflächen (21) bis zu seiner direkten Auflage mit seiner Längskante (5) an einem Stapelschachtgrund (15) des Stapelschachtes (11), wobei während der Absenkbewegung der einzelnen Profilstäbe (2) der ersten Profilstabreihe (3) zwischen der ersten Stapelschachtwand (12) und der Führungsfläche (21) am ersten Übergabearm (17) ein Winkel von 60° eingeschlossen wird,
- nacheinander Verdrehen der weiteren Profilstäbe (2) um deren Längsachsen zur Bildung der ersten Profilstabreihe (3), sodass die weiteren Profilstäbe (2) jeweils mit ihren Seitenflächen (6) an den abfallend ausgerichteten Führungsflächen (21) der ersten Übergabearme (17) angelegt werden,
- geführtes Absenken der weiteren Profilstäbe (2) bis zu deren direkter Auflage mit ihren jeweiligen Längskanten (5) am Stapelschachtgrund (15) des Stapelschachtes (11) und dabei fertiges Ausbilden der ersten Profilstabreihe (3), wobei die beiden äußersten Profilstäbe (2) der ersten Profilstabreihe (3) jeweils mit ihren Seitenflächen (6) anliegend an den beiden Stapelschachtwänden (12, 13) des Stapelschachtes (11) abgestützt werden und dabei die an deren Seitenflächen (6) aneinander liegende Profilstabreihe (3) bilden.

2. Verfahren nach Anspruch 1, **dadurch gekennzeichnet, dass** die ersten Übergabearme (17) soweit vom Zuführtisch (8) über den Stapelschacht (11) hinausragend verstellt werden, dass die in etwa horizontal ausgerichteten Stützflächen (18) bis hin zur ersten Stapelschachtwand (12) reichen und die abfallend ausgerichteten Führungsflächen (21) über die erste Stapelschachtwand (12) hinausragen.

3. Verfahren nach Anspruch 1 oder 2, **dadurch gekennzeichnet, dass** die erste Anzahl von n-Profilstäben (2) während der nacheinander erfolgenden Absenkbewegung hin auf den Stapelschachtgrund (15) aneinander anliegend von der Übergabevorrichtung (10) gehalten werden.

4. Verfahren nach einem der vorhergehenden Ansprüche, **dadurch gekennzeichnet, dass** der dem ersten Profilstab (2) unmittelbar benachbarte zweite Profilstab (2) der ersten Profilstabreihe (3) mit seiner dem ersten Profilstab (2) zugewendeten Seitenfläche (6) an der dieser zugewendeten Seitenfläche (6) des ersten Profilstabes (2) anliegend geführt abgesenkt wird.

5. Verfahren nach einem der vorhergehenden Ansprüche, **dadurch gekennzeichnet, dass** die dem ersten Profilstab (2) der ersten Profilstabreihe (3) nachfolgend jeweils unmittelbar benachbarten weiteren Profilstäbe (2) mit ihren jeweils einander zugewendeten Seitenflächen (6) nacheinander aneinander anliegend geführt bis zur ihrer Auflage am Stapelschachtgrund (15) abgesenkt werden.

6. Verfahren nach einem der vorhergehenden Ansprüche, **dadurch gekennzeichnet, dass** während der Absenkbewegung der einzelnen Profilstäbe (2) der ersten Profilstabreihe (3) die Übergabevorrichtung (10) schrittweise so lange hin in Richtung auf die erste Stapelschachtwand (12) verstellt wird, bis ein Abstand zwischen der ersten Stapelschachtwand (12) und der Übergabevorrichtung (10) der Breite (14) des Stapelschachtes (11) entspricht.

7. Verfahren nach einem der vorhergehenden Ansprüche, **dadurch gekennzeichnet, dass** die Breite (14) des Stapelschachtes (11) in Abhängigkeit von der jeweiligen Querschnittsabmessung des Profilstabes (2) sowie der ersten Anzahl von n-Profilstäben (2) ermittelt und nachfolgend automatisiert eingestellt wird.

8. Verfahren nach einem der vorhergehenden Ansprüche, **dadurch gekennzeichnet, dass** die erste und zweite Stapelschachtwand (12, 13) parallel zueinander sowie insbesondere in vertikaler Ausrichtung angeordnet werden.

9. Verfahren nach einem der vorhergehenden Ansprüche, **dadurch gekennzeichnet, dass** der Stapelschachtgrund (15) ebenflächig und insbesondere horizontal verlaufend ausgerichtet wird.

10. Verfahren nach einem der vorhergehenden Ansprüche, **dadurch gekennzeichnet, dass** nach der Bildung der ersten Profilstabreihe (3) der Stapeltisch (9) zur Aufnahme einer weiteren Profilstabreihe (4, 24) abgesenkt wird.

11. Verfahren nach Anspruch 10, **dadurch gekennzeichnet, dass** am Zuführtisch (8) zumindest eine weitere Anzahl von m-Profilstäben (2) zur Bildung der weiteren Profilstabreihe (4) nebeneinander sowie jeweils auf einer von deren Seitenflächen (6) aufliegend bereitgestellt werden.

12. Verfahren nach Anspruch 10 oder 11, **dadurch gekennzeichnet, dass** mehrere zweite Übergabearme (23) ausgehend vom Zuführtisch (8) mit ihren ersten Enden zumindest bis hin zur ersten Stapelschachtwand (12) des Stapelschachtes (11) verstellt werden und anschließend die weitere Anzahl von m-Profilstäben (2) vom Zuführtisch (8) in senkrechter Richtung zu deren Längserstreckung mittels der Übergabevorrichtung (10) auf die zweiten Übergabearme (23) verlagert werden und weiters von der Übergabevorrichtung (10) die weitere Anzahl von m-Profilstäben (2) jeweils an deren einander zugewendeten Längskanten (5) aneinander anliegend gehalten werden.

13. Verfahren nach einem der Ansprüche 10 bis 12, **dadurch gekennzeichnet, dass** die zweiten Übergabearme (23) in Richtung auf den Zuführtisch (8) zurückverstellt werden, dabei die weitere Profilstabreihe (4) von der Übergabevorrichtung (10) relativ bezüglich des Zuführtisches (8) positioniert gehalten wird und weiters die weitere Anzahl von m-Profilstäben (2) auf die erste Profilstabreihe (3) abgelegt wird.

## Claims

1. A method for the oriented deposition of profiled rods (2), in which the cross-sections of the individual profiled rods (2) of a first row of profiled rods (3) arranged side by side are each deposited with one of their longitudinal edges (5) pointing downwards in a direction towards a stacking table (9) of a stacking installation (1), wherein the method comprises the following steps:
- provision of at least an initial number of n-profiled rods (2) on a feed table (8) of the stacking installation (1), wherein the profiled rods (2) are placed side by side as well as resting on one of their side areas (6) on the feed table (8),
- formation of a stacking shaft (11) at the stacking table (9) of the stacking installation (1) subsequently at the feed table (8), wherein the stacking shaft (11) is formed with a width (14) between first and second stacking shaft walls (12, 13), which width (14) is determined and set at least in roughly one product value of a cross-sectional dimension between side areas (6) of an individual profiled rod (2) aligned running parallel to one another and the initial number "n" of profiled rods (2),
- adjustment of a plurality of first transfer arms (17) starting from the feed table (8), so that first ends (20) of the first transfer arms (17) protrude beyond the stacking shaft (11) on the side facing away from the feed table (8),
- transfer of the initial number of n-profiled rods (2) in a vertical direction with respect to the longitudinal extension thereof by means of a transfer device (10) to the first transfer arms (17) located above the stacking table (9),
**characterized in that**
the profiled rods are hexagonal and that the initial number of n-profiled rods (2) is placed on support areas (18) arranged on the transfer arms (17) with a roughly horizontal alignment, so that the first profiled rod (2) with its longitudinal edge (5) in the direction of transfer is brought into abutment with the at least one first stacking shaft wall (12) arranged spaced apart from the feed table (8),
and further **characterized by**
- adjacent holding of the initial number of n-profiled rods (2) at their respective longitudinal edges (5) facing each other by means of the transfer device (10),
- readjustment of the first transfer arms (17) in the direction towards the feed table (8), wherein first end regions of the first transfer arms (17) each have, adjoining the roughly horizontally aligned support area (18), a guide surface (21) oriented in a sloping manner towards the first end (20), and during the re-adjustment movement of the first transfer arms (17) the first profiled rod (2) is moved from its abutment with the roughly horizontally aligned support surfaces (18) into the region of the slopingly aligned guide surfaces (21),
- swiveling of the first profiled rod (2) about its longitudinal axis during this, so that it lies with one of its side surfaces (6) at the first stacking shaft wall (12) and with one of its other side surfaces (6) bears against the slopingly aligned guide surfaces (21) of the first transfer arms (17),
- guided lowering of the first profiled rod (2) with one of its side surfaces (6) at the first stacking shaft wall (12), as well as with one of its other side surfaces (6) at the guide surfaces (21) until it rests directly with its longitudinal edge (5) on a stacking shaft bottom (15) of the stacking shaft (11), wherein during the lowering movement of the individual profiled rods (2) of the first profiled rod row (3) there is an angle of 60° between the first stacking shaft wall (12) and the guide surface (21) at the first transfer arm (17),
- consecutive rotation of the further profiled rods (2) about the longitudinal axes thereof for creating the first profiled rod row (3), so that the other profiled rods (2) are each placed with their side surfaces (6) on the slopingly aligned guide surfaces (21) of the first transfer arms (17),
- guided lowering of the other profiled rods (2) until they rest directly with their longitudinal edges (5) in each case on the stacking shaft bottom (15) of the stacking shaft (11) and final completion of the first profiled rod row (3) during this, wherein the two outermost profiled rods (2) of the first profiled rod row (3) are each supported with their side surfaces (6) resting against the two stacking shaft walls (12, 13) of the stacking shaft (11) and thereby form the profiled rod row (3) adjoining one another at their side surfaces (6).

2. The method according to claim 1, **characterized in that** the first transfer arms (17) are adjusted to protrude beyond the stacking shaft (11) so far from the feed table (8) that the horizontally arranged support areas (18) extend up to the first stacking shaft wall (12) and the slopingly aligned guide surfaces (21) protrude beyond the first stacking shaft wall (12).

3. The method according to claim 1 or 2, **characterized in that** the initial number of n profiled rods (2) are held by the transfer device (10) adjoining each other during the consecutive lowering movement to the stacking shaft bottom (15).

4. The method according to one of the preceding claims, **characterized in that** the second profiled rod (2) of the first profiled rod row (3) immediately adjacent to the first profiled rod (2) is lowered in a guided manner with its side surface (6) facing the first profiled rod (2) adjacent to the side surface (6) of the first profiled rod (2) facing it.

5. The method according to one of the preceding claims, **characterized in that** the further profiled rods (2) immediately adjacent to the first profiled rod (2) of the first profiled rod row (3) in each case are lowered consecutively in a guided manner with their side surfaces (6) facing one another adjacent to one another until they come to rest on the stacking shaft bottom (15).

6. The method according to one of the preceding claims, **characterized in that** during the lowering movement of the individual profiled rods (2) of the first profiled rod row (3), the transfer device (10) is adjusted gradually in the direction towards the first stacking shaft wall (12) until a gap between the first stacking shaft wall (12) and the transfer device (10) corresponds to the width (14) of the stacking shaft (11).

7. The method according to one of the preceding claims, **characterized in that** the width (14) of the stacking shaft (11) is determined depending on the respective cross-sectional measurement of the profiled rod (2) and also the initial number of n-profiled rods (2) and is subsequently set automatically.

8. The method according to one of the preceding claims, **characterized in that** the first and the second stacking shaft wall (12, 13) are arranged parallel to one other and also, in particular, in vertical alignment.

9. The method according to one of the preceding claims, **characterized in that** the stacking shaft bottom (15) is aligned in a planar and, in particular, horizontally running manner.

10. The method according to one of the preceding claims, **characterized in that** following the formation of the first row of profiled rods (3), the stacking table (9) is lowered to receive a further row of profiled rods (4, 24).

11. The method according to claim 10, **characterized in that** at the feed table (8) at least a further number of m-profiled rods (2) for creating the other profiled rod row (4) is provided side by side and resting in each case on one of the side surfaces (6) thereof.

12. The method according to claim 10 or 11, **characterized in that** a plurality of second transfer arms (23) starting from the feed table (8) are adjusted with their first ends at least up to the first stacking shaft wall (12) of the stacking shaft (11) and the further number of m-profiled rods (2) are subsequently displaced from the feed table (8) in a vertical direction to longitudinal extension thereof by means of the transfer device (10) onto the second transfer arms (23) and, furthermore, the further number of m-profiled rods (2) is held adjoining one another by the transfer device (10) at their longitudinal edges (5) facing one another in each case.

13. The method according to one of claims 10 to 12, **characterized in that** the second transfer arms (23) are readjusted in the direction towards the feed table (8), during which the further profiled rod row (4) is held by the transfer device (10) positioned in relation to the feed table (8) and, furthermore, the other number of m-profiled rods (2) is deposited on the first profiled rod row (3).

## Revendications

1. Procédé de pose orientée de barres profilées (2), dans lequel les sections transversales des différentes barres profilées (2) d'une première série de barres profilées (3) de barres profilées (2) juxtaposées sont posées chacune avec leurs arêtes longitudinales (5) orientées vers le bas en direction d'une table d'empilement (9) d'une installation d'empilement (1), ce procédé comprenant les étapes suivantes :
- mise à disposition d'au moins un premier nombre de n barres profilées (2) sur une table d'alimentation (8) de l'installation d'empilement (1), les barres profilées (2) étant posées les unes à côté des autres ainsi que sur une de leurs faces latérales (6), appuyées sur la table d'alimentation (8),
- formation d'un puits d'empilement (11) sur la table d'empilement (9) de l'installation d'empilement (1) à la suite de la table d'empilement (8), le puits d'empilement (11) étant réalisé avec une largeur (14) entre des première et deuxième parois de puits d'empilement (12, 13), cette largeur (14) étant déterminée et réglée à partir d'au moins une valeur du produit d'une dimension de section transversale entre des faces latérales (6) orientées parallèlement entre elles d'une seule barre profilée (2) et du premier nombre « n » de barres profilées (2),
- déplacement de plusieurs premiers bras de transfert (17) à partir de la table d'alimentation (8), de façon à ce que des premières extrémités (20) des premiers bras de transfert (17) dépassent du puits d'empilement (11) sur le côté opposé à la table d'alimentation (8),
- déplacement du premier nombre de n barres profilées (2) dans une direction perpendiculaire à leur extension longitudinale au moyen d'un dispositif de transfert (10) sur les premiers bras de transfert (17) se trouvant au-dessus de la table d'empilement (9),
**caractérisé en ce que**
les barres profilées sont des barres à six pans et **en ce que** le premier nombre de n barres profilées (2) est déplacé sur des faces d'appui (18), orientées approximativement horizontalement, disposées sur les bras de transfert (17), de façon à ce que, dans la direction de transfert, la première barre profilée (2) soit amenée en appui, avec son arête longitudinale (5), contre au moins une première paroi du puits d'empilement (12) disposée à distance de la table d'alimentation (8), et en outre **caractérisé par**
- le maintien en appui les unes contre les autres du premier nombre de n barres profilées (2) au niveau de leurs arêtes longitudinales (5), orientées les unes vers les autres, au moyen du dispositif de transfert (10),
- le retour des premiers bras de transfert (17) en direction de la table d'alimentation (8), des premières zones d'extrémité des premiers bras de transfert (17) comprenant, à la suite de la face d'appui (18) orientée approximativement horizontalement, une face de guidage (21) s'étendant de manière inclinée en direction de la première extrémité (20) et, pendant le retour des premiers bras de transfert (17), la première barre profilée (2) est amenée de son appui contre les faces d'appui (18) orientées approximativement horizontalement vers la zone des faces de guidage (21) orientées de manière inclinée,
- le pivotement de la première barre profilée (2) autour de son axe longitudinal, de façon à ce qu'elle s'appuie, avec une de ses faces latérales (6), contre la première paroi du puits d'empilement (12) et, avec une autre de ses faces latérales (6), contre les faces de guidage (21) inclinées des premiers bras de transfert (17),
- l'abaissement guidé de la première barre profilée (2) avec une de ses faces latérales (6) contre la première paroi du puits d'empilement (12) ainsi qu'avec une autre de ses faces latérales (6), contre les faces de guidage (21) jusqu'à son appui direct avec son arête longitudinale (5) contre un fond du puits d'empilement (15) du puits d'empilement (11), moyennant quoi, pendant le mouvement d'abaissement des différentes barres profilées (2) de la première série de barres profilées (3), un angle de 60° est formé entre la première paroi du puits d'empilement (12) et la face de guidage (21) sur le premier bras de transfert (17),
- la rotation successive des autres barres profilées (2) autour de leurs axes longitudinaux pour la formation de la première série de barres profilées (3), de façon à ce que les autres barres profilées (2) soient appuyées, avec leurs faces latérales (6), contre les faces de guidage (21) inclinées des premiers bras de transfert (17),
- l'abaissement guidé des autres barres profilées (2) jusqu'à leur appui direct avec leurs arêtes longitudinales (5) respectives contre le fond du puits d'empilement (15) du puits d'empilement (11) et fin de la formation de la première série de barres profilées (3), les deux barres profilées (2) extérieures de la première série de barres profilées (3) étant appuyées, avec leurs faces latérales (6) respectives, contre les deux parois du puits d'empilement (12, 13) du puits d'empilement (11) et formant ainsi la série de barres profilées (3) appuyées les unes contre les autres au niveau de leurs faces latérales (6).

2. Procédé selon la revendication 1, **caractérisé en ce que** les premiers bras de transfert (17) sont déplacés de manière dépassante de la table d'alimentation (8) au-delà du puits d'empilement (11) jusqu'à ce que les faces d'appui (18) orientées approximativement horizontalement atteignent la première paroi du puits d'empilement (12) et les faces de guidage (21) inclinées dépassent au-delà de la première paroi du puits d'empilement (12).

3. Procédé selon la revendication 1 ou 2, **caractérisé en ce que** le premier nombre de n barres profilées (2) sont maintenues par le dispositif de transfert (10), pendant le mouvement d'abaissement successif, de manière appuyée entre elles en direction du fond du puits d'empilement (15).

4. Procédé selon l'une des revendications précédentes, **caractérisé en ce que** la deuxième barre profilée (2) de la première série de barres profilées (3), immédiatement adjacente à la première barre profilée (2), est abaissée de manière guidée en s'appuyant, avec sa face latérale (6) orientée vers la première barre profilée (2), contre la face latérale (6) de la première barre profilée (2) appuyée contre elle.

5. Procédé selon l'une des revendications précédentes, **caractérisé en ce que** les autres barres profilées (2) immédiatement suivant la première barre profilée (2) de la première série de barres profilées (3) sont abaissées successivement, de manière guidée et appuyée entre elles, avec leurs faces latérales (6) orientées les unes vers les autres, jusqu'à ce qu'elles s'appuient contre le fond du puits d'empilement (15).

6. Procédé selon l'une des revendications précédentes, **caractérisé en ce que**, pendant le mouvement d'abaissement des différentes barres profilées (2) de la première série de barres profilées (3), le dispositif de transfert (10) est déplacé par étapes en direction de la première paroi du puits d'empilement (12) jusqu'à ce qu'une distance entre la première paroi du puits d'empilement (12) et le dispositif de transfert (10) corresponde à la largeur (14) du puits d'empilement (11).

7. Procédé selon l'une des revendications précédentes, **caractérisé en ce que** la largeur (14) du puits d'empilement (11) est déterminé en fonction de la dimension de section transversale correspondante de la barre profilée (2) ainsi que du premier nombre de n barres profilées (2) puis est réglée de manière automatisée par la suite.

8. Procédé selon l'une des revendications précédentes, **caractérisé en ce que** les première et deuxième parois du puits d'empilement (12, 13) sont disposées de manière parallèle entre elles ainsi que, plus particulièrement, dans une orientation verticale.

9. Procédé selon l'une des revendications précédentes, **caractérisé en ce que** le fond du puits d'empilement (15) est plat et est orienté, plus particulièrement dans une direction horizontale.

10. Procédé selon l'une des revendications précédentes, **caractérisé en ce que**, après la formation de la première série de barres profilées (3), la table d'empilement (9) est abaissée pour le logement d'une autre série de barres profilées (4, 24).

11. Procédé selon la revendication 10, **caractérisé en ce que**, sur la table d'alimentation (8) sont préparées au moins un autre nombre de m barres profilées (2) pour la formation d'une autre série de barres profilées (4) juxtaposées et reposant sur une des leurs faces latérales (6).

12. Procédé selon la revendication 10 ou 11, **caractérisé en ce que** plusieurs deuxièmes bras de transfert (23) sont déplacés à partir de la table d'alimentation (8) avec leurs premières extrémités au moins jusqu'à la première paroi du puits d'empilement (12) du puits d'empilement (11) puis l'autre nombre de m barres profilées (2) sont déplacés de la table d'alimentation (8) dans une direction perpendiculaire à leur extension longitudinale au moyen du dispositif de transfert (10) vers les deuxièmes bras de transfert (23) et, en outre, le dispositif de transfert (10) maintient l'autre nombre de m barres profilées (2) de manière appuyée les unes contre les autres au niveau de leurs arêtes longitudinales (5) orientées les unes vers les autres.

13. Procédé selon l'une des revendications 10 à 12, **caractérisé en ce que** les deuxièmes bras de transfert (23) sont retournés en direction de la table d'alimentation (8), l'autre série de barres profilées (4) étant maintenue par le dispositif de transfert (10) de manière positionnée par rapport à la table d'alimentation (8) et, en outre, l'autre nombre de m barres profilées (2) sont déposées sur la première série de barres profilées (3).
